# EUROPEAN PATENT APPLICATION

(11) **EP 4 489 467 A1**
(43) Date of publication of application: **08.01.2025**
(21) Application number: 23778078.8
(22) Date of filing: 27.03.2023
(51) Int. Cl.: H04W 24/02

(54) **COMMUNICATION METHOD AND APPARATUS USED FOR TRAINING MACHINE LEARNING MODEL**

(30) Priority: 28.03.2022 CN 202210313970
(71) Applicant: Huawei Technologies Co., Ltd., Shenzhen, Guangdong 518129 (CN)
(72) Inventor: SHI, Xiaoli, Shenzhen, Guangdong 518129 (CN); XU, Ruiyue, Shenzhen, Guangdong 518129 (CN)
(74) Representative: Gill Jennings & Every LLP
(86) International application number: PCT/CN2023/084011
(87) International publication number: WO 2023/185711

(57) **Abstract**

This application provides a communication method for machine learning model training and an apparatus, to improve the effect of machine learning model training and reduce a waste of resources. The method includes: A first device receives first information from a second device, where the first information includes at least one of a first indication and a training condition of a machine learning model. A value range of the first indication includes a first value and a second value, a value of the first indication is the first value, and the first value indicates the first device to perform training on the machine learning model. The first device performs training on the machine learning model based on the first information.

## Description

### CROSS-REFERENCE TO RELATED APPLICATIONS

This application claims priority to Chinese Patent Application No. 202210313970.1, filed with the China National Intellectual Property Administration on March 28, 2022 and entitled "COMMUNICATION METHOD FOR MACHINE LEARNING MODEL TRAINING AND APPARATUS", which is incorporated herein by reference in its entirety.

### TECHNICAL FIELD

This application relates to the field of mobile communication technologies, and in particular, to a communication method for machine learning model training and an apparatus.

### BACKGROUND

Management data analytics (management data analytics, MDA) provides a capability of processing and analyzing original data related to network service events and states, and provides analysis reports to implement necessary operations for network service operation. Currently, the MDA can be combined with artificial intelligence (artificial intelligence, AI) or machine learning (machine learning, ML) technologies, to improve network service management and coordination for intelligence and automation.

A management data analytics service (management data analytics service, MDAS) is a management service capable of MDA. An MDAS producer (MDAS producer) can output analysis reports to an MDAS consumer (MDAS consumer) in different scenarios, for example, a coverage problem analysis scenario, a fault event analysis scenario, or a mobility management analysis scenario. In different scenarios, ML models for obtaining analysis reports may be different.

Currently, an AI/ML model training management service (management service, MnS) producer (AI/ML model training MnS producer) (model training producer for short) may initiate ML model training based on a request of a model training management service consumer (AI/ML model training MnS consumer) (model training consumer for short). Alternatively, a model training producer may initiate ML model training, where the model training producer is a training party of a model. Currently, the effect of improving performance of the ML model obtained through ML model training is not desirable, and a waste of resources exists.

### SUMMARY

This application provides a communication method for machine learning model training and an apparatus, to improve a training effect of an ML model and reduce a waste of resources.

According to a first aspect, this application provides a communication method for machine learning model training. The method may be performed by a first device or a component in the first device. The component is, for example, at least one of a training execution module, a processor, a transceiver, a processing module, or a transceiver module. The first device may be an execution device of the ML model training. For example, the communication method is performed by the first device. The method may include: The first device receives first information from a second device. The first information includes at least one of a first indication and a training condition of an ML model. A value range of the first indication includes a first value and a second value, where the first value indicates the first device to perform training on the ML model, the second value indicates the first device not to perform training on the ML model, and a value of the first indication is the first value. In addition, the first device further performs training on the ML model based on the first information.

According to the method, the first device may perform training on the ML model based on the first information from the second device. The first information includes at least one of the first indication and the training condition of the ML model. Therefore, the training on the ML model performed by the first device is determined by the second device, or is based on a condition that is for starting the training on the ML model by the first device and that is indicated by the second device. Therefore, a case in which the first device starts the training on the ML model when the training on the ML model does not need to be performed can be avoided, so that a waste of resources is reduced.

In a possible implementation, the first device may be a model training producer, and the second device may be a model training consumer. For example, the model training producer may include a domain management function unit or a cross-domain management function unit. For example, the model training consumer may include a domain management function unit or a cross-domain management function unit. It may be understood that the model training producer in this application may be an ML model training management service producer (ML model training MnS producer), and the model training consumer may be an ML model training management service consumer (ML model training MnS consumer).

In a possible implementation, the first device may further send a training result of the ML model to the second device.

The training result may include a trained ML model. Therefore, the second device may obtain the trained ML model, to perform problem analysis based on the trained ML model, and improve analysis performance.

In a possible implementation, the first information includes the first indication. The first device may start the training on the ML model, and send a second indication to the second device. The second indication is used to notify the starting of the training on the ML model. Alternatively, the second indication indicates the second device to determine whether to perform training on the ML model. Alternatively, the second indication indicates the second device to determine whether the first device performs training on the ML model.

In this implementation, the first device may indicate, by using the second indication, to start the training on the ML model (or indicate the starting of the training on the ML model), the first device may indicate the second device to determine whether to perform training on the ML model, or the first device may indicate the second device to determine whether the first device performs training on the ML model. The second device may determine, based on the second indication, whether the first device performs training on the ML model. If determining that the first device performs training on the ML model, the second device may send the first indication whose value is the first value to the first device. Correspondingly, the first device may receive the first indication whose value is the first value from the second device, to perform training on the ML model. Optionally, in this implementation, the case in which the first device starts the training on the ML model when the training on the ML model does not need to be performed can be avoided, so that a training effect of the ML model is improved and the resource waste is reduced. In addition, in this implementation, the second device can learn, based on the second indication, that the first device starts the training on the ML model. In this way, a case in which the training on the ML model is initiated repeatedly by the second device and a training conflict caused thereby can be avoided.

In a possible implementation, the first device may further send a third indication to the second device, where the third indication is used to request a training control parameter of the ML model. The first device may further receive the training control parameter of the ML model from the second device, where the training control parameter of the ML model is used by the first device to perform training on the ML model.

In this implementation, the first device may request the training control parameter of the ML model from the second device, to perform training on the ML model based on the training control parameter of the ML model. This may improve training efficiency of the ML model.

In a possible implementation, the training control parameter of the ML model includes at least one of an identifier of the ML model, type information of the ML model, iteration times of the training on the ML model, a performance requirement of the ML model, training time of the ML model, and data used to train the ML model.

According to this implementation, the first device performs training on the ML model based on the training control parameter of the ML model, so that the training effect of the ML model can be further improved, and the training efficiency of the ML model can be improved. Optionally, the training control parameter of the ML model may further include a parameter such as a psychological periodicity, to improve periodicity of the training on the ML model.

In a possible implementation, the data used to train the ML model includes at least one of the following: a data source, an updated network state, and updated training data.

According to this implementation, the data used to train the ML model may be further accurately set, to further improve the training effect of the ML model, and improve the training efficiency of the ML model.

In a possible implementation, the training condition of the ML model includes at least one of the following: a network load condition, a network coverage condition, and a network performance condition. It should be understood that in this application, the training condition of the ML model may also be referred to as a training policy of the ML model.

In this implementation, the second device may accurately and flexibly set the training condition of the ML model. When the training condition is met, the first device may start the training on the ML model. In this way, the case in which the first device starts the training on the ML model when the training on the ML model does not need to be performed is further avoided, so that the resource waste is further reduced.

In a possible implementation, the network load condition includes at least one of a physical resource block (physical resource block, PRB) utilization threshold and a user connection quantity threshold.

In this implementation, the network load condition may be further accurately and flexibly set. In this way, the case in which the first device starts the training on the ML model when the training on the ML model does not need to be performed is further avoided, so that the resource waste is further reduced.

In a possible implementation, the network coverage condition includes at least one of a reference signal received power (reference signal received power, RSRP) threshold, a coverage rate threshold of the RSRP threshold in an area, a reference signal received quality (reference signal received quality, RSRQ) threshold, a coverage rate threshold of the RSRQ threshold in an area, a reference signal signal to interference plus noise ratio (reference signal signal to interference plus noise ratio, RSSINR) (which may be referred to as a signal to interference plus noise ratio for short) threshold, and a coverage rate threshold of the RSSINR threshold in an area.

In this implementation, the network coverage condition may be further accurately and flexibly set. In this way, the case in which the first device starts the training on the ML model when the training on the ML model does not need to be performed is further avoided, so that the resource waste is further reduced.

In a possible implementation, the network performance condition includes at least one of a handover success rate threshold, a data energy efficiency threshold, and a network slice energy efficiency threshold.

In this implementation, the network performance condition may be further accurately and flexibly set. In this way, the case in which the first device starts the training on the ML model when the training on the ML model does not need to be performed is further avoided, so that the resource waste is further reduced.

In a possible implementation, the first device may further send training state information of the ML model to the second device, where the training state information indicates whether the ML model is trained, or the training state information indicates whether the training on the ML model is performed based on at least one of a performance evaluation result of the ML model, the updated network state, and the updated training data.

In this implementation, the first device may indicate whether the ML model is trained, or indicate whether the training on the ML model is performed based on the performance evaluation result, the updated network state, or the updated training data, so that the second device can accurately learn whether the ML model is trained, and/or whether the training on the ML model is initiated based on the performance evaluation result, the updated network state, or the updated training data. In this way, the second device more properly determines whether the first device performs training on the ML model, the case in which the first device starts the training on the ML model when the training on the ML model does not need to be performed is further avoided, and repeated training is reduced Optionally, if the second device determines that the first device performs training on the ML model, the second device may send the first indication whose value is the first value to the first device.

In a possible implementation, the first device may further send second information to the second device, where the second information includes at least one of information indicating a training progress of the ML model, estimated training time of the training on the ML model, training execution duration of the ML model, training beginning time of the ML model, or training end time of the ML model.

Based on this implementation, the first device may indicate the training progress, the estimated training time, the execution duration, the beginning time, or the end time of the ML model to the second device by using the second information, so that the second device can learn a training state in a timely manner.

According to a second aspect, this application provides a communication method for machine learning model training. The method may be performed by a second device or a component in the second device. The component may include at least one of a training control module, a processor, a transceiver, a processing module, or a transceiver module. For example, the communication method is performed by the second device. The method may include: The second device determines first information, where the first information includes at least one of a first indication and a condition for starting training on an ML model by a first device. A value range of the first indication includes a first value and a second value, where the first value indicates the first device to perform training on the ML model, the second value indicates the first device not to perform training on the ML model, and a value of the first indication is the first value. The second device further sends the first information to the first device

In a possible implementation, the first device may be a model training producer, and the second device may be a model training consumer. For example, the model training producer may include a domain management function unit or a cross-domain management function unit. For example, the model training consumer may include a domain management function unit or a cross-domain management function unit. It may be understood that the model training producer in this application may be an ML model training management service producer, and the model training consumer may be an ML model training management service consumer.

In a possible implementation, the second device may further receive a training result of the ML model from the first device.

In a possible implementation, the first information includes the first indication, and the second device may further receive a second indication from the first device, where the second indication is used to notify the starting of the training on the ML model. Alternatively, the second indication indicates the second device to determine whether the first device performs training on the ML model. Alternatively, the second indication indicates the second device to determine whether the first device performs training on the ML model.

In a possible implementation, the second device may receive a third indication from the first device, where the third indication is used to request a training control parameter of the ML model. The second device may further send the training control parameter of the ML model to the first device, where the training control parameter of the ML model is used by the first device to perform training on the ML model.

In a possible implementation, the training control parameter of the ML model includes at least one of an identifier of the ML model, type information of the ML model, iteration times of the training on the ML model, a performance requirement of the ML model, training time of the ML model, and data used to train the ML model.

In a possible implementation, the data used to train the ML model includes at least one of the following: a data source, an updated network state, and updated training data.

In a possible implementation, the condition for starting the training on the ML model by the first device includes at least one of the following: a network load condition, a network coverage condition, and a network performance condition.

In a possible implementation, the network load condition includes at least one of a PRB utilization threshold and a user connection quantity threshold.

In a possible implementation, the network coverage condition includes at least one of the following: an RSRP threshold and a coverage rate threshold of the RSRP threshold in an area, an RSRQ threshold and a coverage rate threshold of the RSRQ threshold in an area, and an RSSINR threshold and a coverage rate threshold of the RSSINR threshold in an area.

In a possible implementation, the network performance condition includes at least one of a handover success rate threshold, a data energy efficiency threshold, and a network slice energy efficiency threshold.

In a possible implementation, the second device may further receive training state information of the ML model from the first device, where the training state information indicates whether the ML model is trained, or the training state information indicates whether the training on the ML model is performed based on at least one of a performance evaluation result of the ML model, the updated network state, and the updated training data.

In a possible implementation, the second device may further receive second information from the first device, where the second information includes at least one of information indicating a training progress of the ML model, estimated training time of the training on the ML model, training execution duration of the ML model, training beginning time of the ML model, or training end time of the ML model.

According to a third aspect, this application provides a communication method for machine learning model training. The method may be performed by a first device or a component in the first device. The component is, for example, at least one of a training execution module, a processor, a transceiver, a processing module, or a transceiver module. The first device may be an execution device of the ML model training. For example, the communication method is performed by the first device. The method may include: The first device sends a new data based machine learning ML training indication to a second device, where the new data based ML training indication indicates whether to perform training based on updated training data of an ML model. Based on the method, the second device may determine, based on the new data based machine learning ML training indication, whether the first device performs training based on the updated training data of the ML model, to provide information or a parameter needed for training to the first device in a timely manner, and improve training accuracy.

In a possible implementation, the first device receives a training control parameter of the ML model from the second device, where the training control parameter of the ML model is used by the first device to perform training on the ML model.

In a possible implementation, the first device may further send second information to the second device, where the second information includes at least one of the following: information indicating a training progress of the ML model; estimated training time of the training on the ML model; training execution duration of the ML model; training beginning time of the ML model; or training end time of the ML model.

In a possible implementation, the information indicating the training progress of the ML model includes information indicating that the training on the ML model begins or information indicating that the training on the ML model ends.

In a possible implementation, the first device may further send training state information of the ML model to the second device, where the training state information indicates running of the training on the ML model.

According to a fourth aspect, this application provides a communication method for machine learning model training. The method may be performed by a second device or a component in the second device. The component may include at least one of a training control module, a processor, a transceiver, a processing module, or a transceiver module. For example, the communication method is performed by the second device. The method may include: The second device receives a new data based machine learning ML training indication from a first device, where the new data based ML training indication indicates whether to perform training based on updated training data of an ML model.

In a possible implementation, the second device may further send a training control parameter of the ML model to the first device, where the training control parameter of the ML model is used by the first device to perform training on the ML model.

In a possible implementation, the second device may further receive second information from the first device, where the second information includes at least one of the following: information indicating a training progress of the ML model; estimated training time of the training on the ML model; training execution duration of the ML model; training beginning time of the ML model; or training end time of the ML model.

In a possible implementation, the information indicating the training progress of the ML model includes information indicating that the training on the ML model begins or information indicating that the training on the ML model ends.

In a possible implementation, the second device may further receive training state information of the ML model from the first device, where the training state information indicates running of the training on the ML model.

For advantageous effects of the fourth aspect and the possible implementations of the fourth aspect, refer to descriptions of advantageous effects in the first aspect or the third aspect.

According to a fifth aspect, an embodiment of this application provides a first device, including modules configured to perform steps in any aspect of the first aspect and any possible implementation of the first aspect.

For example, the first device may include a transceiver module and a processing module. The transceiver module may be configured to support the first device in performing communication in at least one of a wired manner and a wireless manner. The communication may include transmission or reception of a signal, information, signaling, data, a message, or the like. The processing module may be configured to support the first device in performing a processing action. The processing action includes but is not limited to generating content sent by the transceiver module, processing content received by the transceiver module, or performing each processing action in the first aspect or the third aspect and any possible implementation of the first aspect or the third aspect.

According to a sixth aspect, an embodiment of this application provides a second device, including modules configured to perform steps in any aspect of the second aspect and any possible implementation of the second aspect.

For example, the second device may include a transceiver module and a processing module. The transceiver module may be configured to support the second device in performing communication in at least one of a wired manner and a wireless manner. The communication may include transmission or reception of a signal, information, signaling, data, a message, or the like. The processing module may be configured to support the second device in performing a processing action. The processing action includes but is not limited to generating content sent by the transceiver module, processing content received by the transceiver module, or performing each processing action in the second aspect or the fourth aspect and the possible implementations of the second aspect or the fourth aspect.

According to a seventh aspect, an embodiment of this application provides a communication apparatus, including at least one processing element (for example, a processor or a chip) and at least one storage element (for example, a memory or a storage unit). The at least one storage element is configured to store a program and data, and the at least one processing element is configured to perform the method provided in the first aspect and the second aspect and any possible design of the first aspect and the second aspect. Alternatively, the communication apparatus may include a module configured to perform steps in any aspect of the first aspect and any possible implementation of the first aspect, for example, a transceiver module and a processing module. The transceiver module may be configured to support the communication apparatus in performing communication in at least one of a wired manner and a wireless manner. The communication may include transmission or reception of a signal, information, signaling, data, a message, or the like. The processing module may be configured to support the communication apparatus in performing a processing action. The processing action includes but is not limited to generating content sent by the transceiver module, processing content received by the transceiver module, or performing each processing action in any one of the first aspect to the fourth aspect and the possible implementations of the first aspect to the fourth aspect.

According to an eighth aspect, an embodiment of this application provides a communication method for machine learning model training. The communication method may be implemented by the first device or a component in the first device in the first aspect and any possible design of the first aspect, and the second device or a component in the second device in the second aspect and any possible design of the second aspect. The communication method may include: A second device sends first information to a first device, where the first information includes at least one of a first indication and a condition for starting training on an ML model by the first device. A value range of the first indication includes a first value and a second value, where the first value indicates the first device to perform training on the ML model, the second value indicates the first device not to perform training on the ML model, and a value of the first indication is the first value. The first device may perform training on the ML model based on the first information.

In a possible implementation, the first device may be a model training producer, and the second device may be a model training consumer. For example, the model training producer may include a domain management function unit or a cross-domain management function unit. For example, the model training consumer may include a domain management function unit or a cross-domain management function unit. It may be understood that the model training producer in this application may be an ML model training management service producer, and the model training consumer may be an ML model training management service consumer.

In a possible implementation, the first device may further send a training result of the ML model to the second device. Correspondingly, the second device may receive the training result of the ML model from the first device.

In a possible implementation, the first information includes the first indication. The first device may start the training on the ML model, and send a second indication to the second device. Correspondingly, the second device may receive the second indication from the first device.

In a possible implementation, the first device may further send a third indication to the second device, where the third indication is used to request a training control parameter of the ML model. Correspondingly, the second device may receive the third indication from the first device. The second device may further send the training control parameter of the ML model to the first device, where the training control parameter of the ML model is used by the first device to perform training on the ML model. Correspondingly, the first device may receive the training control parameter of the ML model from the second device.

In a possible implementation, the training control parameter of the ML model includes at least one of an identifier of the ML model, type information of the ML model, iteration times of the training on the ML model, a performance requirement of the ML model, training time of the ML model, and data used to train the ML model.

In a possible implementation, the data used to train the ML model includes at least one of the following: a data source, an updated network state, and updated training data.

In a possible implementation, the training condition of the ML model includes at least one of the following: a network load condition, a network coverage condition, and a network performance condition. It should be understood that in this application, the training condition of the ML model may also be referred to as a training policy of the ML model.

In a possible implementation, the network load condition includes at least one of a PRB utilization threshold and a user connection quantity threshold.

In a possible implementation, the network coverage condition includes at least one of the following: an RSRP threshold and a coverage rate threshold of the RSRP threshold in an area, an RSRQ threshold and a coverage rate threshold of the RSRQ threshold in an area, and an RSSINR threshold and a coverage rate threshold of the RSSINR threshold in an area.

In a possible implementation, the network performance condition includes at least one of a handover success rate threshold, a data energy efficiency threshold, and a network slice energy efficiency threshold.

In a possible implementation, the first device may further send training state information of the ML model to the second device, where the training state information indicates whether the ML model is trained, or the training state information indicates whether the training on the ML model is performed based on at least one of a performance evaluation result of the ML model, the updated network state, and the updated training data. Correspondingly, the second device may receive the training state information of the ML model from the first device.

In a possible implementation, the first device may further send second information to the second device, where the second information includes at least one of information indicating a training progress of the ML model, estimated training time of the training on the ML model, training execution duration of the ML model, training beginning time of the ML model, or training end time of the ML model. Correspondingly, the second device may receive the second information from the first device.

Optionally, the method shown in the sixth aspect may further include the method provided in any possible implementation of the first aspect. The method may further include the method provided in any possible implementation of the second aspect.

Alternatively, the method shown in the eighth aspect may be implemented by the first device or a component in the first device in any one of the third aspect and the possible designs of the third aspect, and the second device or a component in the second device in any one of the fourth aspect and the possible designs of the fourth aspect. Therefore, the method may include an action implemented by the first device in any one of the third aspect and the possible designs of the third aspect, and an action implemented by the second device in any one of the fourth aspect and the possible designs of the fourth aspect.

According to a ninth aspect, an embodiment of this application further provides a computer program product. The computer program product includes a computer program, and when the computer program runs on a computer, the computer is enabled to perform the method provided in any one of the first aspect to the fourth aspect and the possible designs of the first aspect to the fourth aspect.

According to a tenth aspect, an embodiment of this application further provides a computer-readable storage medium. The computer-readable storage medium stores a computer program, and when the computer program is executed by a computer, the computer is enabled to perform the method provided in any one of the first aspect to the fourth aspect and the possible designs of the first aspect to the fourth aspect.

According to an eleventh aspect, an embodiment of this application further provides a chip. The chip is configured to read a computer program stored in a memory, to perform the method provided in any one of the first aspect to the fourth aspect and the possible designs of the first aspect to the fourth aspect.

According to a twelfth aspect, an embodiment of this application further provides a chip system. The chip system includes a processor, configured to support a computer apparatus in implementing the method provided in any one of the first aspect to the fourth aspect and the possible designs of the first aspect to the fourth aspect. In a possible design, the chip system further includes a memory, and the memory is configured to store a program and data that are necessary for the computer apparatus. The chip system may include a chip, or may include a chip and another discrete component.

According to a thirteenth aspect, an embodiment of this application further provides a communication system. The communication system may include the first device provided in any one of the first aspect and the possible designs of the first aspect and the second device provided in any one of the fourth aspect and the possible designs of the fourth aspect. The first device may be implemented by using the apparatus provided in the fifth aspect or the seventh aspect. The second device may be implemented by using the apparatus provided in the sixth aspect or the seventh aspect.

For advantageous effects of steps provided in any one of the second aspect to the thirteenth aspect and the possible designs of the second aspect to the thirteenth aspect, refer to advantageous training on the ML model based on the first information effects of the steps provided in the first aspect and the possible designs of the first aspect.

### BRIEF DESCRIPTION OF DRAWINGS

FIG. 1 is a schematic diagram of an architecture of a service system according to this application;
FIG. 2 is a schematic diagram of an architecture of another service system according to this application;
FIG. 3 is a schematic diagram of an architecture of another service system according to this application;
FIG. 4 is a schematic diagram of an architecture of ML model training according to this application;
FIG. 5 is another schematic diagram of an architecture of ML model training according to this application;
FIG. 6 is a schematic flowchart of a communication method for machine learning model training according to this application;
FIG. 7 is a schematic flowchart of another communication method for machine learning model training according to this application;
FIG. 8 is a schematic flowchart of another communication method for machine learning model training according to this application;
FIG. 9 is a schematic flowchart of another communication method for machine learning model training according to this application;
FIG. 10 is a schematic diagram of an interaction manner between communication apparatuses according to this application;
FIG. 11 is a schematic diagram of another interaction manner between communication apparatuses according to this application;
FIG. 12 is a schematic diagram of another interaction manner between communication apparatuses according to this application;
FIG. 13 is a schematic diagram of a structure of a communication apparatus according to this application; and
FIG. 14 is a schematic diagram of a structure of another communication apparatus according to this application.

### DESCRIPTION OF EMBODIMENTS

The following describes embodiments of this application in detail with reference to accompanying drawings of this specification.

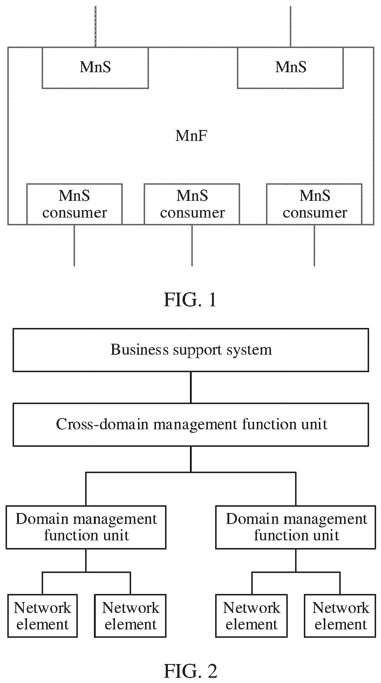

Embodiments of this application may be applied to various mobile communication systems, for example, a new radio (new radio, NR) system, a long term evolution (long term evolution, LTE) system, an advanced long term evolution (advanced long term evolution, LTE-A) system, a future communication system, and other communication systems. Specifically, this is not limited herein. For example, embodiments in this application may be applied to an NR network management architecture. The NR network management architecture may include a management function (management function, MnF). The MnF is a management entity defined in the 3rd generation partnership project (3rd generation partnership project, 3GPP). Externally visible behavior and interfaces of the MnF are defined as management services (management services, MnSs). In a service-providing management architecture, the MnF acts as an MnS producer or an MnS consumer. A management service produced by an MnS producer of the MnF may have a plurality of MnS consumers. The MnF may consume a plurality of management services from one or more management service producers. As shown in FIG. 1, an MnS provided by an MnF may be used to provide a service for another MnF (for example, denoted as MnF#A). In this case, the MnF may serve as an MnS producer, and the MnF#A may serve as an MnS consumer. In addition, the MnF may further obtain, from another MnF (denoted as MnF#B, which may be the same as or different from the MnF#A), an MnS service provided by the MnF#B. In other words, in this case, the MnF shown in FIG. 1 may also serve as an MnS consumer of the MnS service provided by the MnF#B. In other words, a same MnF may serve as a consumer of an MnS service and a producer of an MnS service.

FIG. 2 is a schematic diagram of a service-based management architecture to which a method embodiment of this application is applicable. The service-based management architecture includes a business support system (business support system, BSS), a cross-domain management function (cross-domain management function, CD-MnF) unit, a domain management function (domain management function, Domain-MnF) unit, and a network element (net element, NE). It should be understood that the cross-domain management function unit may be a node such as a network management system (network management system, NMS), an MnS Producer or an MnS Consumer, and the domain management function unit may be a node such as a wireless automation engine (MBB automation engine, MAE), an element management system (element management system, EMS), an MnS Producer, or an MnS Consumer.

In this application, the cross-domain management function unit is configured to manage one or more domain management function units. The domain management function unit may be configured to manage one or more network elements. The following briefly describes each unit.

If a management service is a management service provided by the cross-domain management function unit, the cross-domain management function unit is a management service producer, and the business support system is a management service consumer.

If a management service is a management service provided by the domain management function unit, the domain management function unit is a management service producer, and the cross-domain management function unit is a management service consumer.

If a management service is a management service provided by the network element, the network element is a management service producer, and the domain management function unit is a management service consumer.

The business support system is oriented to a communication service (communication service), and is configured to provide functions and management services such as charging, settlement, accounting, a customer service, business, network monitoring, communication service life cycle management, and service intent translation. The business support system may be an operator operation system or a vertical industry operation system (vertical OT system).

The cross-domain management function unit may also be referred to as a network management function (network management function, NMF) unit, for example, may be a network management entity such as an NMS or a network function management service consumer (network function management service consumer, NFMS_C). The cross-domain management function unit provides one or more of the following management functions or management services: life cycle management of a network, deployment of a network, fault management of a network, performance management of a network, configuration management of a network, assurance of a network, an optimization function of a network, translation of network intent from communication service producer (intent from communication service provider, Intent-CSP), and the like.

The network indicated by the management function or the management service may include one or more network elements or subnets, or may be a network slice. In other words, the network management function unit may be a network slice management function (network slice management function, NSMF) unit, a cross-domain management data analytics function (management data analytics function, MDAF) unit, a cross-domain self-organization network function (self-organization network function, SON Function) unit, or a cross-domain intent management function (intent driven management service, Intent Driven MnS) unit.

In embodiments of this application, the network element is an entity that provides a network service. The network element may include a core network element, a radio access network element, a transport network element, or the like. For example, in the architecture shown in FIG. 2, the domain management function unit may include a radio access network domain management function unit, a core network element domain management function unit, or a transport network domain management function unit. The radio access network domain management function unit may be configured to manage the radio access network element, the core network element domain management function unit may be configured to manage the core network element, and the transport network domain management function unit may be configured to manage the transport network element.

For example, the core network element may include but is not limited to an access and mobility management function (access and mobility management function, AMF) entity, a session management function (session management function, SMF) entity, a policy control function (policy control function, PCF) entity, a network data analytics function (network data analytics function, NWDAF) entity, a network repository function (network repository function, NRF), a gateway, and the like.

The radio access network element may include but is not limited to various types of base stations (for example, a next generation NodeB (generation NodeB, gNB) and an evolved NodeB (evolved NodeB, eNB)), a central unit control plane (central unit control plane, CUCP), a central unit (central unit, CU), a distributed unit (distributed unit, DU), a central unit user plane (central unit user plane, CUUP), and the like. In this application, a network function NF is also referred to as a network element NE.

Optionally, in some deployment scenarios, the cross-domain management function unit may further provide life cycle management of a subnet, deployment of a subnet, fault management of a subnet, performance management of a subnet, configuration management of a subnet, assurance of a subnet, an optimization function of a subnet, translation of network intent from communication service provider of a subnet, translation of network intent from communication service consumer (intent from communication service consumer, Intent-CSC) of a subnet, and the like. The subnet herein includes a plurality of small subnets, and may be a network slice subnet.

The domain management function unit may also be referred to as the NMF or an element management function unit. For example, the domain management function unit may be an element management entity such as the MAE, the EMS, or a network function management service provider (network function management service provider, NFMS_P).

The domain management function unit provides one or more of the following functions or management services: life cycle management of a subnet or network element, deployment of a subnet or network element, fault management of a subnet or network element, performance management of a subnet or network element, assurance of a subnet or network element, an optimization function of a subnet or network element, translation of intent from a subnet or network element (intent from network operator, Intent-NOP), and the like. The subnet herein includes one or more network elements. The subnet may also include a subnet, in other words, one or more subnets form a larger subnet.

It should be understood that the intent in this application may be an expectation of an intent producer (for example, the network element) or a system (for example, the network or subnet) in which the intent producer is located, and may include a requirement, a target, a constraint, or the like. The translation of intent is a process of determining a policy of the intent. For example, the policy may indicate a condition that does not meet the intent. For example, when the intent is energy saving, a policy A may be: when energy consumption is greater than a first threshold, the energy consumption is abnormal (namely, non-energy saving); and a policy B may be: when energy consumption is greater than a second threshold, the energy consumption is abnormal (namely, non-energy saving). It may be understood that, even for same intent, solutions that can meet the intent and that are determined by using different policies may be different.

Optionally, the subnet herein may alternatively be the network slice subnet. A domain management system may be a network slice subnet management function (network slice subnet management function, NSSMF) unit, a domain management data analytics function (management data analytics function, domain MDAF) unit, a domain self-organization network function (self-organization network function, SON Function), a domain intent management function unit, or the like.

The domain management function unit may be classified in the following manners.

By network types, the domain management function unit may be classified into the following types: a radio access network (radio access network, RAN) domain management function (RAN domain management function, RAN domain MnF) unit, a core network domain management function (core network domain management function, CN domain MnF) unit, and a transport network domain management function (transport network domain management function, TN domain MnF) unit. It should be noted that the domain management function unit may also be a domain network management system, and may manage one or more of the access network, the core network, or the transport network.

By administrative regions, the domain management function unit may be classified as follows: domain management function units of regions, for example, a domain management function unit of a city A and a domain management function unit of a city B.

The network element is an entity that provides a network service, and includes the core network element, the access network element, and the like. The core network element includes an access and mobility management function (access and mobility management function, AMF), a session management function (session management function, SMF), a policy control function (policy control function, PCF), a network data analytics unit (network data analytics function, NWDAF), a network repository unit (NF Repository Function, NRF), a gateway, and the like. The access network element includes a base station (for example, a gNB or an eNB), a central unit control plane (central unit control plane, CUCP), a central unit (central unit, CU), a distributed unit (distribution unit, DU), a central unit user plane (central unit user plane, CUUP), and the like.

The network element may provide one or more of the following management functions or management services: life cycle management of a network element, deployment of a network element, fault management of a network element, performance management of a network element, assurance of a network element, an optimization function of a network element, translation of intent from a network element, and the like.

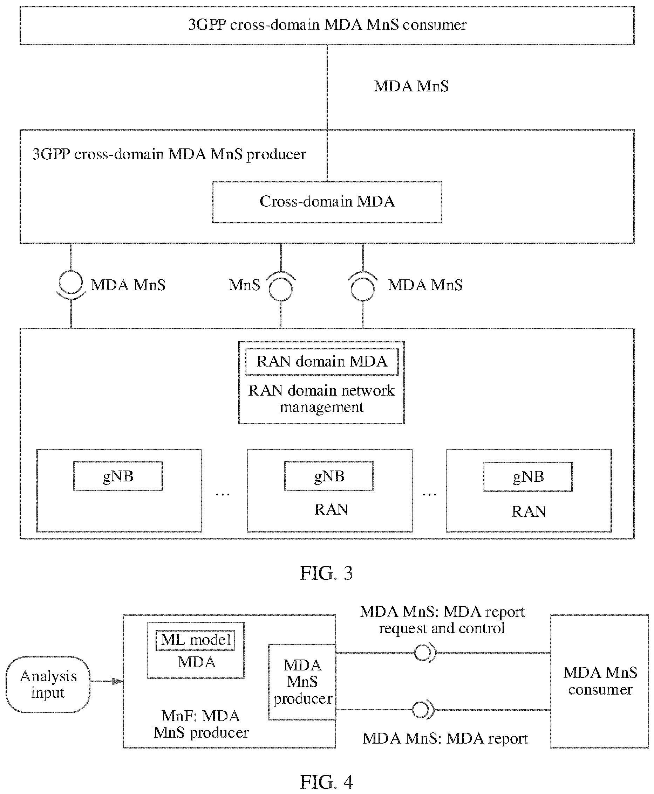

For example, as shown in FIG. 3, in an interaction process between a 3GPP cross-domain MDA (cross-domain MDA) MnS producer and a RAN domain MDA (RAN domain MDA), the cross-domain MDA MnS producer may consume a RAN domain MDA MnS. Alternatively, the cross-domain MDA MnS producer may consume an MDA MnS provided by a RAN domain and produce an MDA MnS that may be consumed by a 3GPP cross-domain MDA MnS consumer.

FIG. 4 shows an example of a schematic diagram of an architecture of an ML model based MDA system. As shown in FIG. 4, the system may include a management function and an MDAS consumer. The management function may include an MDAS producer, or the management function may be implemented by the MDAS producer. In embodiments of this application, the MDAS producer may also be referred to as an MDA MnS producer (MDA MnS producer) or an MnS producer, and the MDAS consumer may also be referred to as an MDA MnS consumer (MDA MnS consumer) or an MnS consumer. In this application, for an MDAS, the MDAS consumer is an MDAS requester device, and the MDAS producer is an MDAS provider device.

In the architecture shown in FIG. 4, the management function may collect and provide an analytics input (analytics input) of an MDA to the MDAS producer. The MDAS consumer may request an MDA report from the MDAS producer and control the MDA report of the MDAS producer. The MDAS consumer controls the MDA report of the MDAS producer. For example, the MDAS consumer may send, to the MDAS producer, a control parameter used to obtain the MDA report.

The management function (or the MDAS producer) may perform inference, based on an ML model, on the analytics input of the MDA, and generate an analytics/inference output. The ML model may have been trained. The management function (or the MDAS producer) may further generate the MDA report based on the analytics/inference output and provide the MDA report to the MDAS consumer.

It should be understood that a line segment that includes a graph including a circle and an arc and that is shown in FIG. 3 and FIG. 4 may represent a service-based interface.

Currently, training on the ML model may be triggered (initiate) in two manners. It should be understood that the triggering in this application may be replaced with starting, beginning, or beginning to perform.

Currently, a manner of triggering the training on the ML model is that a model training consumer triggers the training. It should be understood that the model training consumer and a model training producer may be deployed in a cross-domain management function unit and/or a domain management function unit. For example, the model training producer may include a domain management function unit or a cross-domain management function unit, and the model training consumer may include a domain management function unit or a cross-domain management function unit. In addition, the model training consumer includes a machine learning model training (ML model training, MLMT) management service consumer (MLMT MnS consumer). The MDAS producer used to perform training on the ML model may be referred to as the model training producer, for example, a machine learning model training management service producer (MLMT MnS producer). For example, in an MDAS scenario, the model training consumer may include the MDAS consumer, and the model training producer may include the MDAS producer. It should be understood that model training in this application may include training on an AI/ML model or training on an application (application, APP), or in other words, the AI/ML model may include the application. AI/ML model training may also be referred to as AI/ML training (AI/ML training), AI/ML application training (AI/ML application training, AI/ML APP training), or the like.

It may be understood that the model training producer in this application may be an ML model training management service producer, and the model training consumer may be an ML model training management service consumer.

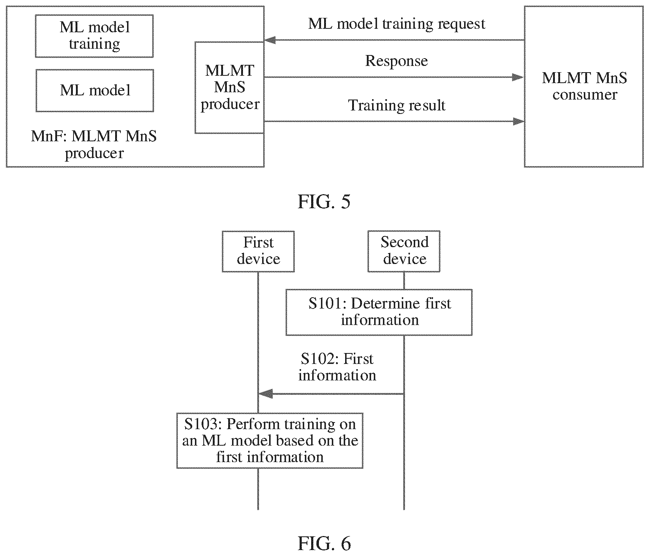

In this triggering manner, as shown in FIG. 5, training on an ML model may be triggered by an ML model training request from one or more model training consumers. Optionally, the model training consumer may provide a data source (data source) as training data used to perform training on the ML model. A model training producer may return a response (response) to the model training consumer to notify the model training consumer whether the training request has been accepted.

In another triggering manner, the model training producer triggers the training on the ML model based on feedback received from the model training consumer or a performance evaluation result of the ML model; or the model training producer triggers the training on the ML model when an updated network state exists or when updated training data is available. In addition, as shown in FIG. 5, when an MDAMnS producer completes the training on the ML model, the MDAMnS producer may send a training result of the ML model to an MDAMnS consumer. In this application, the training result of the ML model may also be referred to as a training result for short.

In this application, the feedback, or referred to as a feedback report, may include an ML model type and ML model precision, or indicate whether a trained ML model is used. For example, the ML model precision included in the feedback may indicate precision determined in a process of using the ML model. If the ML model precision is not high (for example, lower than a precision threshold), the model training producer may start the training on the ML model.

It should be understood that the precision of the ML model may be defined as a quantity of true positives (true positives, TPs) divided by a sum of the quantity of true positives and a quantity of false positives (false positives, FPs).

For interpretation of the quantity of true positives and the quantity of false positives, the true positive is a quantity of times that positive data in test data is identified as a positive by the ML model, and the false positive is a quantity of times that the ML model incorrectly identifies negative data in the test data as a positive. For example, the precision is 90%. Alternatively, the precision may be represented by using a decimal. For example, the precision is 0.9. It is assumed that the positive is a type of identification result in various types of possible identification results of the ML model, and another type of identification result is a negative. The positive data is data whose identification result should be a positive, and the positive data is data whose identification result should be a negative. For example, a positive integer and a non-positive integer are two types of identification results of the ML model. It is assumed that the positive integer is a positive, the non-positive integer is a negative, the positive data includes, for example, 1, and the negative data includes, for example, 0. When the ML model identifies 1 as a positive integer, the quantity of true positives is increased by 1. When the ML model identifies 0 as a positive integer, the quantity of false positives is increased by 1.

In another explanation of the quantity of true positives and the quantity of false positives, the ML model may be configured to identify whether data meets a requirement. If a piece of to-be-identified data should be identified as meeting the requirement, and in a process of identifying the data by the ML model, the data is actually identified as meeting the requirement, the quantity of true positives of the ML model is increased by 1. If a piece of to-be-identified data should be identified as meeting the requirement, but in a process of identifying the data by the ML model, the data is actually identified as not meeting the requirement, the quantity of false positives of the ML model is increased by 1.

The performance evaluation result of the ML model may be used to measure performance of the ML model. If the performance evaluation result of the ML model indicates that the performance of the ML model is poor (for example, time consumed for each calculation of the ML model exceeds a requirement, or a calculation error in the process of using the ML model exceeds an error threshold), the model training producer may trigger the training on the ML model. Optionally, the feedback may also include the performance evaluation result of the ML model.

The updated network state may be a changed network state. It may be understood that, a change of a network state may change the training data used to perform training on the ML model. Therefore, when the network state is updated, the model training producer may trigger the training on the ML model. In this application, the updated network state may also be referred to as a new network state. The updated network state may include, for example, that several cells enter an energy saving state, or transmit power of some cells is adjusted.

The updated training data may be specifically data whose parameters such as data distribution and a data value change, or may be data that changes due to a change of the network state or the like. In this application, the updated training data may also be referred to as new training data. The updated training data may be data obtained from an external server such as a 5G core network, or an application program such as another external application (application, APP). This is not specifically limited in this application.

Currently, an effect of improving the performance of the ML model obtained through the training on the ML model is not good, and a waste of resources exists. For example, if the model training producer initiates the training on the ML model, the model training producer may start the training on the ML model when the training on the ML model does not need to be performed. For example, if the performance of the ML model still can meet a use requirement of the model training consumer, the training on the ML model does not need to be performed. If the model training producer initiates the training on the ML model in this case, the effect of improving the performance of the ML model obtained through the training is not ideal, and the resource waste exists.

To avoid a case in which a first device performs training on an ML model when the training on the ML model does not need to be performed, and reduce the resource waste, an embodiment of this application provides a communication method for machine learning model training.

The communication method may be implemented by the first device and a second device. The first device may be a model training producer or a training execution module in the model training producer, and the second device may be a model training consumer or a training control module in the model training consumer. For example, the model training producer includes an MLMT MnS producer, and the model training consumer may include an MLMT MnS consumer. Specifically, the MLMT MnS producer may be an MDAS producer, and the MLMT MnS consumer may be an MDAS consumer.

Optionally, the first device in this application may include a domain management function unit such as a RAN domain MnF, and the second device may include a cross-domain management function unit. The MLMT MnS consumer and/or the MDAS consumer may be located in the domain management function unit or the cross-domain management function unit. The MLMT MnS producer and/or the MDAS producer may be located in the domain management function unit or the cross-domain management function unit.

As shown in FIG. 6, a communication method for machine learning model training provided in an embodiment of this application may include steps shown in S101 to S103.

S101: A second device determines first information, where the first information includes at least one of a first indication and a training condition of an ML model.

A value range of the first indication includes a first value and a second value, where the first value indicates a first device to perform training on the ML model, the second value indicates the first device not to perform training on the ML model, and a value of the first indication is the first value.

In this application, the training condition of the ML model may also be referred to as (or understood as) a training policy of the ML model. The training policy of the ML model may include a condition for starting the training on the ML model. When the training policy of the ML model is met, the first device may start the training on the ML model. That the training policy of the ML model is met may be understood as that the condition that is for starting the training on the ML model and that is included in the training policy of the ML model is met.

In this application, subsequently, an embodiment in which the first information includes the first indication and an embodiment in which the first information includes the training policy of the ML model are separately described with reference to respective flowcharts. Details are not temporarily described herein.

S102: The second device sends the first information to the first device.

Correspondingly, the first device receives the first information from the second device.

S103: The first device performs training on the ML model based on the first information.

In S103, when the first information includes the first indication, that the first device performs training on the ML model based on the first information may be understood as that the first device begins or continues the training on the ML model after receiving the first indication whose value is the first value. If the first device receives the first indication whose value is the second value, the first device may stop, cancel, or no longer perform the training on the ML model. When the first information includes the training policy of the ML model, that the first device performs training on the ML model based on the first information may be understood as that the first device starts or performs the training on the ML model when the training policy is met.

It should be noted that an algorithm used by the first device to perform training on the ML model includes but is not limited to a simulated annealing (simulated annealing, SA) algorithm, a tabu search (tabu search, TS) algorithm, or another algorithm that can be used for model training. This is not specifically limited in this application.

In this embodiment of this application, the first device may perform training on the ML model based on at least one of the first indication and the training policy of the ML model that are received from the second device. Therefore, the training on the ML model performed by the first device is determined by the second device, or is performed according to the training policy that is of the ML model and that is indicated by the second device. Therefore, a case in which the first device performs training on the ML model when the training on the ML model does not need to be performed can be avoided, and a waste of resources can be reduced. It should be understood that reducing a waste of resources in this application may also be described as saving a training resource or the like. This is not specifically limited.

In an implementation of the first information in S 102, the first information may include the first indication. When the value of the first indication is the first value, it indicates that the second device determines that the first device can perform training on the ML model. When the value of the first indication information is the second value, it indicates that the second device determines that the first device does not perform training on the ML model. It may be learned that the first device may determine, based on the first indication, whether the training on the ML model needs to be performed. For example, when the second device considers, based on current energy consumption or based on performance of the ML model, that the training on the ML model does not need to be performed, the second device sends the first indication whose value is the second value. Correspondingly, the first device may not perform training on the ML model. Alternatively, when the second device determines that current precision of the ML model is insufficient, the second device sends the first indication whose value is the first value, to enable the first device to perform training on the ML model. Correspondingly, after receiving the first indication whose value is the first value, the first device may determine that the second device determines that the first device performs training on the ML model, or after receiving the first indication whose value is the first value, the first device may determine to perform training on the ML model.

For example, the first indication may be indication information such as "yes (yes)" or "no (no)". For example, a bit value of the indication information "yes" is "1", in other words, the first value is "1", and a bit value of the indication information "no" is "0", in other words, the second value is "1". When a bit value is "1", it indicates "yes". When a bit value is "0", it indicates "no". Alternatively, the first value may include another indication indicating "yes" other than "1", and the second value may include another indication indicating "no" other than "0". This is not specifically limited in this application.

In a possible example, the first indication in this application does not belong to or include a training request of the ML model sent by the second device to the first device.

In a possible example, the first indication whose value is the first value in S102 is a positive reply made by the second device to a second indication from the first device. The second indication may be used to notify to start the training on the ML model, or in other words, the second indication may be used to notify the starting of the training on the ML model. It should be understood that the second indication in this application may further indicate the second device to determine whether the first device performs training on the ML model. In another example, the second indication indicates the second device to determine whether the training on ML model is performed by the first device. After receiving the second indication, the second device may determine whether the training on the ML model is performed by the first device, or the second device may determine that the value of the first indication is the first value or the second value.

Therefore, in this application, the first device may indicate, by using the second indication, the second device to start the training on the ML model, or indicate the second device to determine whether the first device performs training on the ML model. This can avoid a case in which the first device starts the training on the ML model when the training on the ML model does not need to be performed, and reduce the resource waste. In addition, based on the second indication, the second device can learn of the training that is of the ML model and that is started by the first device, and a training conflict caused when the second device repeatedly requests the first device to start the training on the ML model is avoided.

Optionally, the first device may send the second indication after starting the training on the ML model. In this application, that the first device starts the training on the ML model may include the following several cases:
Case 1: The first device may start the training on the ML model based on feedback received from the second device or a performance evaluation result of the ML model, or the first device may start the training on the ML model based on an updated network state or updated training data.

For example, the second device may obtain the feedback or the performance evaluation result of the ML model by using the ML model provided by the first device. The first device may further send the feedback or the performance evaluation result of the ML model to the first device, to enable the first device to start the training on the ML model based on the feedback or the performance evaluation result of the ML model. For example, if the feedback from the second device indicates that precision of the ML model is not high, the first device may start the training on the ML model. For another example, if the performance evaluation result of the ML model from the second device indicates that the performance of the ML model is poor, the first device may start the training on the ML model.

In addition, when the first device obtains the updated network state and/or the updated training data, the first device may further start the training on the ML model based on the updated network state and/or the updated training data.

Case 2: The first device may receive a training policy of the ML model from the second device, and after determining that the training policy of the ML model is met, start the training on the ML model. The training policy of the ML model may be from the second device. For the training policy of the ML model, refer to descriptions of the training policy of the ML model in S101 and S301 in this application. This is not limited in this application.

In another implementation of the first information in S101, when the first information includes the training policy of the ML model, the training policy of the ML model may include at least one of the following: a network load condition, a network coverage condition, and a network performance condition. In other words, the condition for starting the training on the ML model may include at least one of the network load condition, the network coverage condition, and the network performance condition. Based on this implementation, in this application, the training condition of the ML model may be accurately and flexibly set, to further reduce the resource waste.

The network load condition is related to current network load. If the current network load meets the network load condition, the first device may start the training on the ML model. In other words, in this case, the first device may perform training on the ML model.

For example, the network load condition may include at least one of a PRB utilization threshold and a user connection quantity threshold. The PRB utilization threshold is, for example, a percentage of PRB utilization in an area (which may be referred to as an analysis area). If a percentage of the PRB utilization in the area exceeds or reaches the threshold, the first device may start the training on the ML model. It may be understood that the analysis area in this application may include a specific area (for example, a geographical location area) and an area in which a specific cell or a specific base station is located, or may include a plurality of specific areas and an area in which a specific cell or a plurality of specific base stations are located. This is not specifically limited in this application. It should be understood that the PRB utilization threshold may be a threshold applicable to a specific area, a specific cell, or a specific base station, or may be a threshold applicable to a plurality of areas, a plurality of cells, and a plurality of base stations. In other words, a training granularity of the ML model may be an area granularity, a cell granularity, or a base station granularity. This is not limited in this application. In this example, the training policy of the ML model may include at least one of a physical resource block utilization threshold and a user connection quantity threshold.

In this application, the training granularity of the ML model is an effective scope of a trained ML model, and the trained ML model may be configured to provide an analytics service within the effective scope. For example, the area granularity, the cell granularity, and the base station granularity respectively mean that the trained ML model may be configured to provide an analysis service in one or more areas, one or more cells, or a coverage area of one or more base stations.

The network load condition may further include a user connection quantity threshold. If a user connection quantity in an area exceeds or reaches a user connection quantity threshold, the first device may start the training on the ML model. It should be understood that the user connection quantity threshold may be a threshold applicable to a specific area, a specific cell, or a specific base station, or may be a threshold applicable to a plurality of areas, a plurality of cells, and a plurality of base stations. In other words, the training granularity may be the area granularity, the cell granularity, or the base station granularity. This is not limited in this application.

The network coverage condition is related to a coverage rate that reaches a signal measurement quantity and that is in an area. The coverage rate is a proportion of a range that is in the area and in which signal quality meets a signal quality threshold to a total range of the area. The signal measurement quantity may include RSRP, RSRQ, and an RSSINR. For example, the network coverage condition in this application may include at least one of an RSRP threshold and a coverage rate threshold of the RSRP threshold in the area, an RSRQ threshold and a coverage rate threshold of the RSRQ threshold in the area, or an RSSINR threshold and a coverage rate threshold of the RSSINR threshold in the area.

For example, if a coverage rate that reaches a threshold of a signal measurement quantity and that is in an area reaches (or exceeds) a coverage rate threshold corresponding to the signal measurement quantity, the training on the ML model does not need to be performed, and the first device does not start the training on the ML model. If a coverage rate that is in an area and that reaches a threshold of a signal measurement quantity does not reach (or does not exceed) a coverage rate threshold of the signal measurement quantity, the training on the ML model needs to be performed, and the first device may start the training on the ML model. For example, the signal measurement quantity is the RSRP, the RSRP threshold is -110 db, and a coverage rate threshold corresponding to the RSRP threshold is 80%. If a range (for example, the range may be a quantity of measurement quantities, a quantity of users, or a quantity of grid (grid) boxes, which is not limited herein in the present invention) that is in an area and in which measured RSRP reaches the RSRP threshold accounts for 82% of a total range of an area, the first device may determine that the training on the ML model does not need to be performed, and the first device does not start the training on the ML model. The quantity of grid boxes refers to a quantity of grid boxes in which a signal measurement quantity in a grid box reaches a signal measurement quantity threshold in the grid box after the area is divided into grid box with an equal area.

In another area, with a same RSRP threshold and a same RSRP coverage rate threshold, if a range in which measured RSRP reaches the RSRP threshold accounts for 75% of a total range of the area, the first device may determine that the training on the ML model needs to be performed. It should be understood that a manner in which the first device obtains the signal measurement quantity such as the RSRP is not limited in this application.

It should be understood that the threshold of the signal measurement quantity and the coverage rate of the signal measurement quantity may be separately indicated, or may be indicated by using a same signaling, message, or information.

The network performance condition is related to network performance. If current network performance is poor, the first device may perform training on the ML model, to optimize the network performance by training the ML model. If current network performance is good, the first device does not need to start the training on the ML model.

For example, the network performance condition may include at least one of a handover success rate (handover success rate) threshold, a data energy efficiency (data energy efficiency) threshold, and a network slice energy efficiency (network slice energy efficiency) threshold.

In this application, the handover success rate may also be referred to as a radio access network handover success rate, and indicates a handover success rate of a handover that is between base stations and that is of user equipment (user equipment, UE) in a radio access network. When the handover success rate does not reach or does not exceed the handover success rate threshold, the first device may perform training on the ML model, to optimize the handover success rate by training the ML model. When the handover success rate reaches or exceeds the handover success rate threshold, the first device does not need to perform training on the ML model.

The data energy efficiency may include an indicator of data energy efficiency of a mobile network in the radio access network. When the data energy efficiency does not reach or does not exceed the data energy efficiency threshold, the first device may perform training on the ML model, to optimize the data energy efficiency by training the ML model. When the data energy efficiency reaches or exceeds the data energy efficiency threshold, the first device does not need to perform training on the ML model.

The network slice energy efficiency is related to network slice performance and network slice energy consumption. When the network slice energy efficiency does not reach or does not exceed the network slice energy efficiency threshold, the first device may perform training on the ML model, to optimize the network slice energy efficiency by training the ML model. When the network slice energy efficiency reaches or exceeds the data energy efficiency threshold, the first device does not need to perform training on the ML model.

It should be understood that for definitions and determining manners of the handover success rate, the data energy efficiency, and the network slice energy efficiency in this application, refer to descriptions in chapter 6 of the 3GPP technical specification (technical specification, TS) 28.554 version (version, V) 17.5.0. In addition, one or more of the handover success rate, the data energy efficiency, and the network slice energy efficiency may be replaced with another indicator that is used to measure the network performance and that is included in the 3GPP TS28.554 V17.5.0. In other words, the network performance condition may further include another indicator that is used to measure the network performance and that is included in the 3GPP TS28.554 V17.5.0 other than the handover success rate, the data energy efficiency, and the network slice energy efficiency.

Therefore, in each embodiment of this application, the network load condition, the network coverage condition, and the network performance condition may be further accurately and flexibly set, to further avoid a case in which the first device starts the training on the ML model when the training on the ML model does not need to be performed, and further reduce a waste of resources.

Optionally, the training policy corresponds to the ML model. In other words, the training policy is determined for the ML model, or in other words, different ML models may have different training policies. Specifically, the second device may determine the training policy of the ML model. For example, when the ML model is used in different scenarios, the training policies of the ML model are different. In an example, in a coverage problem analysis scenario, the training policy of the ML model includes at least the network coverage condition. In another scenario, the network coverage condition is an optional condition for starting the training on the ML model by the first device.

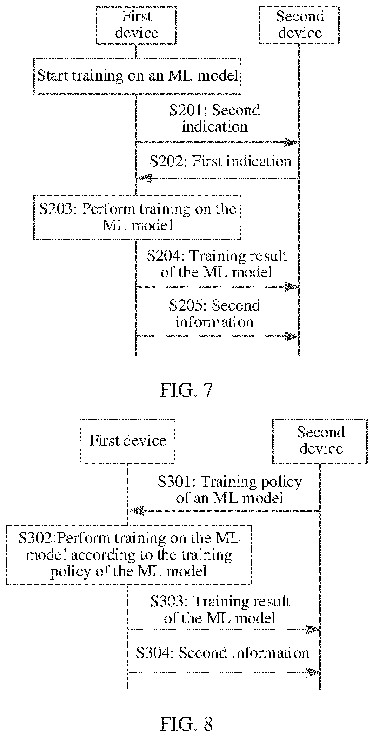

FIG. 7 shows a procedure of a communication method for machine learning model training according to an embodiment of this application. In the procedure, a first device receives a first indication from a second device, and performs training on an ML model based on the first indication. It may be understood that the procedure shown in FIG. 7 is an implementation in which the first information in FIG. 6 includes the first indication. In this case, S102 in FIG. 6 may be implemented by S202 in FIG. 7.

Based on the procedure shown in FIG. 7, after starting the training on the ML model, the first device may send a second indication to the second device, and the second device sends the first indication to the first device based on the second indication. Therefore, a case in which the first device starts the training on the ML model when the training on the ML model does not need to be performed can be avoided, so that a waste of resources is reduced. In addition, in this implementation, the second device can learn, based on the second indication, that the first device starts the training on the ML model. In this way, a case in which the training on the ML model is initiated repeatedly by the second device and a training conflict caused thereby can be avoided.

Specifically, as shown in FIG. 7, in S201, the first device may send the second indication to the second device after starting the training on the ML model. Optionally, in an example, the first device may send a first notification (notification) (or a first message) to the second device, where the first notification may include the second indication.

It should be understood that the second indication may be specific information in the first notification, for example, a specific value of a field or bit. In other words, the specific value of the field or bit may indicate the second device to determine whether the first device performs training on the ML model. For example, the second indication indicates an X^{th} bit in the first notification. When a value of the bit is 1, the bit indicates the second device to determine whether the first device performs training on the ML model, where 0 ≤ X, and X is a positive integer. For example, if the second device receives a notification from the first device, and determines that a value of an X^{th} bit in the notification is 1, the notification or the bit indicates the second device to determine whether the first device performs training on the ML model. In other words, in this case, the second device may determine whether the first device performs training on the ML model, and the notification is the first notification. For example, in a notification received by the second device from the first device, if a value of an X^{th} bit is 0, the notification does not indicate the second device to determine whether the first device performs training on the ML model, or the second device does not need to determine, based on the notification, whether the first device performs training on the ML model. The notification may have another meaning, and this is not specifically required in this application.

In addition, the second indication may alternatively be the first notification. In other words, the notification may indicate the second device whether the first device performs training on the ML model. For example, a notification having a specific name, a notification having a specific attribute, or a notification sent through a specific interface may be used as the first notification. The first notification may not include an attribute, an information field, or a bit that indicates whether to perform training on the ML model. The following describes in detail with reference to an attribute that may be included in the first notification. Details are not described herein.

Further, as shown in FIG. 7, in S202, the second device may send the first indication to the first device. Optionally, the second device may send a second notification (or a second message) to the first device, where the second notification may include the first indication. In other words, S202 may be used as an implementation of S 101.

Specifically, after receiving the second indication shown in S201, the second device may determine whether the first device performs training on the ML model, and perform S202 based on a determining result. A value range of the first indication in S202 includes a first value and a second value. For details, refer to descriptions of the first indication in S101.

If the second device determines that the first device performs training on the ML model, a value of the first indication in S202 is the first value, in other words, the second device sends the first indication whose value is the first value to the first device. If the second device determines that the first device does not perform training on the ML model, a value of the first indication in S202 is the second value, in other words, the second device sends the first indication whose value is the second value to the first device.

Correspondingly, the first device may receive the first indication from the second device, and determines, based on the value of the first indication, whether to perform training on the ML model. If the value of the first indication is the first value, S203 is performed, in other words, the first device performs training on the ML model. It should be understood that S203 in FIG. 7 is an example of S 103 shown in FIG. 6. In addition, if the value of the first indication is the second value, the first device does not perform training on the ML model.

In another implementation, if the second device determines that the first device does not perform training on the ML model, the second device does not perform S202, or does not send the first indication. Correspondingly, if the first device does not receive the second notification, the first device does not need to perform S203.

In the procedure shown in FIG. 7, optionally, the first device may further send training state information of the ML model to the second device, so that the second device may determine, based on the training state information of the ML model, whether the first device performs training on the ML model. For example, in S201, the first device may send the second indication and the training state information of the ML model to the second device.

In a possible implementation, the training state information of the ML model may indicate whether the ML model is trained. For example, the training state information of the ML model may indicate that the ML model is being trained (namely, indicating running (running) of the training on the ML model), that the ML model has been trained, or the like. It should be understood that the training herein includes first training, retraining (ML model retraining), or the like of the ML model. This is not specifically limited.

For example, in this implementation, if the training state information of the ML model indicates that the ML model has been trained, the second device may avoid repeatedly performing training on the ML model, to avoid the training conflict and improve training accuracy of the ML model. Therefore, in this case, the second device may determine that the first device does not perform training on the ML model.

In another possible implementation, the training state information of the ML model may indicate whether the training on the ML model is performed based on a performance evaluation result of the ML model or feedback. For example, if the first device receives the performance evaluation result of the ML model or the feedback from the second device, and triggers the training on the ML model based on the performance evaluation result or the feedback, the training state information of the ML model may indicate that the current training is performed based on the performance evaluation result or the feedback.

In another possible implementation, the training state information of the ML model may indicate whether the training on the ML model is performed based on at least one of an updated network state and updated training data. For example, when the first device determines, based on the updated network state, to perform training on the ML model, the training state information of the ML model may indicate that the training on the ML model is performed based on the updated network state. For another example, when the first device determines, based on the updated training data, to perform training on the ML model, the training state information of the ML model may indicate that the training on the ML model is performed based on the updated training data. For another example, when the first device determines, based on the updated network state and the updated training data, to perform training on the ML model, the training state information of the ML model may indicate that the training on the ML model is performed based on the updated network state and the updated training data.

Further, optionally, the training state information of the ML model may further include information indicating whether the training is performed based on the updated training data sent by the second device, or include information indicating whether the training on the ML model is performed based on updated training data from another source (for example, training data obtained by the first device from another channel).

It should be understood that, if the training state information of the ML model indicates the training on the ML model is performed based on the performance evaluation result of the ML model (or the feedback), or indicates the training on the ML model is performed based on at least one of the updated network state and the updated training data, the second device may determine that the first device performs training on the ML model regardless of whether the ML model has been trained. This is because in this case, even if the ML model has been trained before, precision of the previously trained ML model may not meet a current requirement, and the ML model needs to be retrained to improve the precision.

In this application, the second device may determine, based on the training state information, whether the ML model has been obtained, or whether precision of the obtained ML model meets the requirement, and determine whether the second device needs to be indicated to re-perform training on the ML model, to further avoid a case in which the first device performs training on the ML model when the training on the ML model does not need to be performed.

Optionally, the training state information of the ML model may be specific to one or more specific analysis scenarios (or referred to as use cases (use cases)). For example, the training state information of the ML model indicates whether the ML model in the scenario is trained, or indicates whether the training on the ML model in the specific scenario is performed based on at least one of the performance evaluation result of the ML model, the updated network state, and the updated training data. Therefore, this can help the second device further properly determine, with reference to the scenario, whether the first device performs training on the ML model. For example, different scenarios have different requirements on performance of the ML model. Therefore, the second device may determine, based on the requirement of the scenario on the performance of the ML model, whether the first device performs training on the ML model.

Specifically, the scenarios may include coverage problem analysis (coverage problem analysis), slice coverage analysis (slice coverage analysis), paging optimization analysis (paging optimization analysis), fault analysis (alarm incident analysis), fault prediction analysis (fault prediction analysis), end-to-end (E2E) latency analysis (E2E latency analysis), energy saving analysis (energy saving analysis), mobility performance analysis (mobility performance analysis), network slice load analysis (network slice load analysis), network slice throughput analysis (network slice throughput analysis), and key performance indicator (key performance indicator, KPI) anomaly analysis (KPI anomaly analysis), radio access network node software upgrade (RAN node software upgrade) analysis, or the like.

The coverage problem analysis refers to analyzing coverage problems such as weak coverage, over-coverage, and overshoot coverage, and providing coverage problem analysis results. The slice coverage problem analysis is used to analyze slice coverage, slice availability, and slice prediction information. The paging optimization analysis is used to analyze paging data of subscribers and optimize a paging process of a current network. The fault analysis is used to analyze network alarms, faults, or events and provide a resolution suggestion. The fault prediction analysis is used to analyze and predict potential network faults and provide a resolution suggestion. The end-to-end latency analysis is used to analyze a RAN latency problem, a core network (core network, CN) latency problem, a transport network (transport network, TN) latency problem, a UE latency problem, and a service provider latency problem, to support service level specification (service level specification, SLS) assurance. The energy saving analysis is used to analyze energy consumption and energy efficiency problems of a RAN or CN, to reduce network energy consumption and improve energy efficiency. The mobility analysis is used to analyze network mobility performance, such as premature and delayed handovers, to improve the handover success rate. The network slice load analysis is used to analyze performance policy and KPI deterioration caused by a load problem (for example, radio resource utilization), to provide a suggestion for a network slice load problem. The network slice throughput analysis is used to analyze and predict a throughput of a network slice, to improve or ensure a network throughput. The KPI anomaly analysis is used to analyze cross-domain and single-domain KPIs, to identify a root cause and provide a rectification suggestion. The root cause is a cause of a KPI anomaly. For example, the root cause include a parameter configuration anomaly, a software anomaly, a hardware device anomaly, or an increase in a service requirement. The radio access network node software upgrade analysis may be used to analyze and optimize time for upgrading RAN node software. Expected impact is small within the time, or expected operating costs and a data loss are small within the time, so that service interruption is avoided and operating costs are saved. In other words, by using the radio access network node software upgrade analysis, software upgrade may be automatically started at good time when the expected operating costs and the data loss are small. For the foregoing scenarios, refer to descriptions in chapter 7 in the 3GPP TS 28.104 V0.3.0 and chapter 6 in the technical report (technical report, TR) 28.809 V17.0.0. Details are not described herein again.

It should be understood that, in embodiments of this application, optionally, the second indication and the training state information of the ML model may be carried in a same message (for example, the first notification), or may be sent separately. This is not specifically limited.

The following describes, with reference to Table 1, a possible implementation in which the training state information of the ML model is included in the first notification. Details are not described herein.

FIG. 8 shows a procedure of another communication method for machine learning model training according to an embodiment of this application. In the procedure, a first device receives a training policy of an ML model from a second device. The training policy of the ML model is a condition for starting training on the ML model by the first device. Therefore, the procedure shown in FIG. 8 can avoid a case in which the first device starts the training on the ML model when the training on the ML model does not need to be performed, and reduce a waste of resources. It may be understood that the procedure shown in FIG. 8 is an implementation that is of the procedure shown in FIG. 6 and that is used when the first information includes the training policy of the ML model. In this case, S102 in FIG. 6 may be implemented by S301 in FIG. 8. For example, the procedure shown in FIG. 8 may include S301 and S302.

As shown in FIG. 8, in S301, the second device may send the training policy of the ML model to the first device. In other words, S301 may be used as an implementation of S101 shown in FIG. 6.

Optionally, in S301, the second device may send the training policy of the ML model to the first device. Optionally, when determining that the first device needs to perform training on the ML model, the second device may send the training policy of the ML model to the first device. That the first device needs to perform training on the ML model is determined, for example, when performance of the ML model does not meet a requirement of the second device on the performance of the ML model. Alternatively, after specified time after previous training on the ML model, the second device may determine that the training on the ML model needs to be performed.

In S302, the first device may perform training on the ML model according to the training policy of the ML model.

It should be understood that S302 is an example of S103.

As described in S 103, that the first device performs training on the ML model according to the training policy of the ML model may be understood as that the first device performs training on the ML model after the training policy of the ML model is met.

In a possible implementation of the procedure shown in FIG. 8, the first device may further request the second device to determine whether the first device performs training on the ML model, to avoid that the first device starts the training on the ML model when the training on the ML model does not need to be performed. For example, S302 may further include: After determining that the training policy of the ML model is met, the first device sends a second indication to the second device. Optionally, the second indication may be implemented by using S201 in the procedure shown in FIG. 7. Therefore, refer to descriptions in S201. The first device may further receive a first indication from the second device. When a value of the first indication is a first value, the first device may perform training on the ML model. Otherwise, if the value of the first indication is a second value, or the first device does not receive a first indication whose value is the first value, the first device stops or does not perform training on the ML model. Optionally, the first indication may be implemented by using S202 in the procedure shown in FIG. 7. Therefore, refer to descriptions in S202.

In embodiments of this application, the first device may further receive a training control parameter of the ML model from the second device, and the training control parameter is used to perform training on the ML model. For example, in S103, S203, and S302, the first device may perform training on the ML model based on the training control parameter of the ML model.

For example, the training control parameter of the ML model includes at least one of parameters such as an identifier of the ML model, type information of the ML model, iteration times of the training on the ML model, a performance requirement of the ML model, training time of the ML model, and data used to train the ML model. For example, that the first device performs training on the ML model based on the training control parameter of the ML model means that the first device performs training on the ML model based on at least one of parameters such as the iteration times of the training on the ML model, the performance requirement of the ML model, the training time of the ML model, and the data used to train the ML model. Optionally, at least one of the identifier of the ML model and the type information of the ML model may be used to determine an ML model to be trained.

According to this example, the first device performs training on the ML model based on the training control parameter of the ML model, so that a training effect of the ML model can be further improved, and training efficiency of the ML model can be improved.

The identifier of the ML model may indicate an ML model to which the training control parameter is applicable. Therefore, the first device may perform training, based on the training control parameter, on the ML model with the identifier.

The type information of the ML model may indicate a type or a training type of the ML model to which the training control parameter is applicable. The type or the training type of the ML model may correspond to a scenario to which the ML model is applicable. For example, the type of the ML model may include types such as coverage problem analysis and slice coverage problem analysis. For details, refer to scenario descriptions in this application. Therefore, the first device may perform training on the ML model of the type.

Optionally, when the training control parameter does not include the identifier of the ML model or the type information of the ML model, the first device may apply the training control parameter to training on all ML models. The iteration times of the training on the ML model may indicate a maximum quantity of times of training performed on the ML model.

The performance requirement of the ML model may include, for example, a precision requirement or a confidence requirement of the ML model. The precision requirement of the ML model includes, for example, an accuracy rate requirement and an error rate requirement. An accuracy rate represents accuracy of a trained ML model, and an error rate represents an error percentage of the trained ML model. Confidence is reliability of the trained ML model. For example, the performance requirement of the ML model may indicate that the accuracy rate requirement of the ML model is 99%, and the confidence requirement is 90%.

The training time of the ML model may indicate duration needed for the training on the ML model. For example, the training time of the ML model indicates that the first device needs to perform training on the ML model for one day or N (N is greater than 0) hours.

The data used to train the ML model may include at least one of the following: a data source, an updated network state, and updated training data. Therefore, the training control parameter of the ML model may further accurately set the data used to train the ML model, to further improve the training effect of the ML model, or may indicate the first device to perform training on the ML model based on a part of data, to improve the training efficiency of the ML model.

The data source is data that is obtained based on a data source (candidate data source) address and that is used by the first device to perform training on the ML model. The data source address may be from the first device. The data source may be disposed in advance in a device to which the data source address belongs. In this application, there is no specific requirement on data included in the data source.

The updated network state may include change information of a network state, for example, include an indication indicating that a network state has changed. For example, when some cells in an analysis area enter an energy saving state, the updated network state may indicate that these cells enter the energy saving state.

The updated training data may be specifically data obtained after a change of data distribution, a data value, or the like.

It should be understood that the data used to train the ML model may include data from the second device, data collected by the first device, or data obtained by the first device from another device. For example, the another device may include a 5G core network, an application program such as an APP, or an external server. This is not specifically limited.

Optionally, at least one of the parameters such as the iteration times of the training on the ML model, the performance requirement of the ML model, the training time of the ML model, and the data used to train the ML model may be a common training control parameter, namely, applicable to training processes of a plurality of ML models. The at least one of the parameters such as the iteration times of the training on the ML model, the performance requirement of the ML model, the training time of the ML model, and the data used to train the ML model may alternatively be a training control parameter set for one ML model or a plurality of ML models. In other words, the training control parameter of the ML model is applicable only to a training process of one ML model or training processes of a plurality of ML models. Type information of the plurality of ML models may be the same. When the training control parameter of the ML model includes the identifier of the ML model and/or the type information of the ML model, the first device may perform training, based on the at least one of the parameters such as the iteration times of the training on the ML model, the performance requirement of the ML model, the training time of the ML model, and the data used to train the ML model, on the ML model that has the identifier of the ML model and/or the type information of the ML model.

In addition, the training control parameter of the ML model may further include a parameter of a training periodicity, to improve training periodicity of the ML model.

It may be understood that, because ML models in different scenarios may be different, in different analysis scenarios, training control parameters used to train the ML model may be different. In other words, the training control parameter of the ML model may be set or determined for a specific scenario.

Optionally, the training control parameter of the ML model may be sent by the second device to the first device. For example, in the procedure shown in FIG. 7, the first device may send, in S202, the first indication whose value is the first value and the training control parameter of the ML model. For example, the first indication and the training control parameter of the ML model may be carried in a same notification (for example, the first notification) or message, or the first indication and the training control parameter of the ML model may be carried in different notifications or messages. For another example, in the procedure shown in FIG. 8, the first device may send the training policy and the training control parameter of the ML model to the second device in S301. For example, the training policy and the training control parameter of the ML model may be carried in a same notification or message, or the training policy and the training control parameter of the ML model may be carried in different notifications or messages. Alternatively, regardless of whether S202 and S301 are performed, the second device may send the training control parameter of the ML model to the first device via another notification or message.

In a possible example, in each embodiment of this application, the first device may request the training control parameter of the ML model from the second device, to accurately obtain the training control parameter needed for training the ML model, and improve the training efficiency. Correspondingly, the second device may send the training control parameter of the ML model to the first device based on the request of the first device.

For example, the first device may send a third indication to the second device, where the third indication may be used to request the training control parameter of the ML model, so that the second device sends the training control parameter of the ML model to the first device after receiving the third indication. For example, the third indication may include at least one of the identifier of the ML model and the type information of the ML model. It should be understood that the third indication may be sent before or after the first device receives the first information in S102. In a possible implementation, the third indication may be sent by the first device for current training. For example, the first device sends the third indication after receiving first information. In another implementation, the third indication may alternatively be sent in a previous training process of the ML model. This is not specifically limited in this application. For example, in the procedure shown in FIG. 7, the first device may send the second indication and the third indication in S201. The second indication and the third indication may be carried in a same notification (for example, the first notification) or message, or the second indication and the third indication may be carried in different notifications or messages. For another example, in the procedure shown in FIG. 8, after receiving the training policy of the ML model shown in S301, the first device may send the third indication to the second device, for example, send a notification or another message that carries the third indication. Alternatively, regardless of whether S201 and S301 are performed, the first device may send the third indication to the second device via a notification or a message.

In another possible example, the training control parameter of the ML model may be preconfigured in the first device, or may be obtained by the first device from another device. This is not specifically limited in this application.

In embodiments of this application, after performing training on the ML model, the first device may further send a training result of the ML model to the second device. Correspondingly, the second device receives the training result of the ML model from the first device, to perform problem analysis based on a trained ML model, and improve analysis performance. For example, optionally, the procedure shown in FIG. 7 may further include S204. In S204, the first device sends the training result of the ML model to the second device. For another example, the procedure shown in FIG. 8 may further include S303. In S303, the first device sends the training result of the ML model to the second device. It should be understood that dashed arrows in FIG. 7 and FIG. 8 represent optional steps.

Optionally, the first device may send the training result of the ML model to the second device based on a training result reporting method (reporting method) configuration of the ML model. For example, the training result reporting method configuration of the ML model may include a configuration such as a training result reporting periodicity of the ML model or a training result reporting manner of the ML model. In this way, the first device may report the training result of the ML model to the first device based on at least one of the periodicity or the reporting manner indicated by the training result reporting method configuration. Optionally, the training result reporting method configuration may include at least one of the identifier of the ML model and the type information of the ML model, to indicate specific ML models, where the training result reporting method configuration is applicable to reporting of training results of the specific ML models.

The training result reporting manner of the ML model may include a file data reporting (file data reporting) (or file reporting for short) manner, a streaming data reporting (streaming data reporting) (or streaming reporting for short) manner, or a notification reporting manner.

In an example, if the first device sends the training result of the ML model to the second device in the streaming reporting manner, the first device may send, to the second device, a notification including fields such as establishing streaming connection (establish streaming connection), terminating streaming connection (terminate streaming connection), and reporting streaming data (report streaming data). The reporting streaming data field may include the training result of the ML model.

In another example, if the first device sends the training result to the second device in the file reporting manner, the first device may send, to the second device, a notification including fields such as file subscribing (subscribe), file unsubscribing (unsubscribe), and listing available files (list available files). The listing available files field may include the training result of the ML model.

Alternatively, in another example, if the first device sends the training result to the second device in the file reporting manner, the first device may send a notifying file ready (notify file ready) message to the second device, where the message may include the training result of the ML model. In addition, in a file reporting process, notifying a file preparation error (notify file preparation error) represents reporting an error.

In another example, if the first device sends the training result to the second device in the notification reporting manner, the first device may send the training result of the ML model to the second device via an original notification or a newly defined notification.

It should be understood that, for the file data reporting manner or the streaming data reporting manner, refer to descriptions in the 3GPP TS28.532 V16.10.0.

In a possible implementation, the first device obtains the training result reporting method configuration from the second device. For example, the first device may send, to the second device, an indication (which may be referred to as a fourth indication) used to request the training result reporting method configuration of the ML model. After receiving the fourth indication, the second device sends the training result reporting method configuration of the ML model to the first device. Optionally, the fourth indication and the second indication may be the same or different. In other words, the first device may request, from the second device by using a same indication (or information or request), the training control parameter of the ML model and the training result reporting method configuration of the ML model. For example, in the procedure shown in FIG. 7, the first device may send the second indication and the fourth indication in S201. The second indication and the fourth indication may be carried in a same notification (for example, the first notification) or message, or the second indication and the fourth indication may be carried in different notifications or messages. For another example, in the procedure shown in FIG. 8, after receiving the training policy of the ML model shown in S301, the first device may send the fourth indication to the second device, for example, send a notification or another message that carries the fourth indication. Alternatively, regardless of whether S201 and S301 are performed, the first device may send the second indication to the second device via another notification or message.

In another possible implementation, if the first device requests the training control parameter of the ML model from the second device, for example, the first device sends the second indication to the second device, the second device may send the training control parameter of the ML model and the training result reporting method configuration of the ML model to the first device by default. In addition, the training result reporting method configuration may alternatively be sent independently of the training control parameter.

In addition, the training result reporting method configuration of the ML model may also be preconfigured in the first device, or may be obtained by the first device from another device other than the second device. This is not specifically limited in this application.

In embodiments of this application, by using a specific interface operation or an instance object class (instance object class, IOC), for example, an ML training indication (ML training indication), or by reusing an existing MnS operation, the first device may send, to the second device, at least one of the second indication, the third indication, or the fourth indication to the second device, or send, to the second device, a notification or a message including at least one of the second indication, the third indication, or the fourth indication.

For example, a notification in a specific format may be defined as the first notification that carries the second indication in S201. For example, the specific format is embodied in that the notification has a specific name, or the notification includes a specific attribute (attribute). For example, the specific notification may include attributes shown in Table 1. In this case, the notification is the second indication in S201 shown in FIG. 7, or the notification including the attributes shown in Table 1 may be used as the second indication. As shown in Table 1, the notification includes a training type (training type), an ML training state (ML training state) attribute, and an ML training control request (ML training control request) attribute. When receiving a notification carrying the foregoing attributes, the second device may learn that the notification indicates the second device to determine whether the first device performs training on the ML model, in other words, may learn that the notification is the second indication. Therefore, after receiving the notification, the second device may determine whether the first device performs training on the ML model, and send the first indication to the first device. For a process of determining, by the second device, whether the first device performs training on the ML model and a corresponding process of sending the first indication, refer to descriptions of the embodiment shown in FIG. 7.

Further optionally, the ML training control request attribute may be used as the third indication.

**Table 1**

| Attribute name (attribute name) | Definition (definition) |
|---|---|
| Training type | Indicates a type of an ML model, or includes type information of the ML model |
| ML training state | Indicates a training state of the ML model, in other words, includes training state information of the ML model |
| ML training control request | Is used to request a training control parameter of the ML model |

In addition, the first notification may further include information such as the identifier of the ML model. This is not specifically limited in this application.

Optionally, the ML training state in Table 1 may include attributes shown in Table 2.

**Table 2**

| Attribute name | Definition |
|---|---|
| Feedback based ML training (feedback based ML training) | Indicates whether the training is performed based on a performance evaluation result of the ML model |
| New data based ML training (new data based ML training) | Indicates whether the training is performed based on an updated network state or updated training data of the ML model |
| Others (others) | Others |

Optionally, the ML training control request attribute in Table 1 may include attributes shown in Table 3.

**Table 3**

| Attribute name | Definition |
|---|---|
| Iteration times (iteration times) | Is used to request iteration times of the training on the ML model |
| Training performance (training performance) | Is used to request a performance requirement of the ML model |
| Training data scope (training data scope) | Is used to request data used to train the ML model |
| Training time scope (training time scope) | Is used to request training time of the ML model |
| Reporting method (reporting method) | Is used to request a training result reporting method configuration of the ML model, namely, used to carry a fourth indication |

Based on an implementation similar to those in Table 1 to Table 3, the second device may send at least one of the first indication and the training control parameter to the second device by using a specific interface operation or an instance object class, or by reusing an existing MnS operation. For example, when sending training control parameters to the first device, the second device may send a notification carrying the attributes shown in Table 3. In this case, the attributes shown in Table 3 may carry corresponding training control parameters. For example, the iteration times attribute may carry the iteration times of the training on the ML model, and the training performance may carry the performance requirement of the ML model.

In embodiments of this application, optionally, the first device may indicate a training progress of the ML model to the second device, so that the second device learns of the training state in a timely manner.

For example, the first device may send second information to the second device, where the second information includes at least one of information indicating the training progress of the ML model, estimated training time of the ML model, training execution duration of the ML model, training beginning time of the ML model, and training end time of the ML model. Optionally, the second information may include the identifier of the ML model.

The information indicating the training progress of the ML model may indicate that the training on the ML model starts or ends. For example, a message (for example, a notification) or information indicates that the first device begins the training on the ML model. When beginning the training on the ML model, the first device sends the message or the information to the second device. For another example, a specific value of a field or a bit indicates that the training on the ML model begins. When the first device begins the training on the ML model, a value of the field or the bit is set to the value, to indicate that the first device begins to perform training on the ML model.

Alternatively, the information indicating the training progress of the ML model may include a percentage value indicating a completed (or uncompleted) progress of the current training on the ML model. For example, a carried value indicates that the completed progress is 50%.

The estimated training time of the training on the ML model may indicate estimated duration of the training on the ML model, namely, estimated duration between the training beginning time and the training end time. For example, the estimated training time of the training on the ML model may indicate that estimated duration of the current training is six hours.

The training execution duration of the ML model may indicate how long the current training on the ML model has been performed. For example, the training execution duration of the ML model indicates that the first device has performed training on ML for three hours.

The training beginning time of the ML model may indicate training beginning time of the current training on the ML model. For example, the training beginning time of the ML model indicates that the current training begins at 7 ante meridiem (ante meridiem, AM).

The training end time of the ML model may indicate estimated time for completing the training on the ML model. For example, the estimated training time of the training on the ML model may include completion time, and the completion time may indicate, for example, that the training on the ML model is estimated to be completed at 3 post meridiem (post meridiem, PM). For another example, the estimated training time of the training on the ML model may include estimated remaining time. For example, the estimated remaining time indicates that estimated remaining duration of the training is three hours, or the training is estimated to be completed after another three hours.

Optionally, the second information may be carried in a newly defined notification or an existing notification, or the second information may be included in a newly defined notification or an existing notification. This is not limited in this application.

For example, an ML model training start notification (ML model training start notification) may indicate estimated duration of ML model training. For example, the ML model training start notification may include attributes shown in Table 4.

**Table 4**

| Attribute name | Definition |
|---|---|
| ML training time (ML training time period) | Estimated duration of ML model training |

For another example, an ML model training end notification (ML model training end notification) may indicate a progress percentage and training estimated end time of the ML model. For example, the ML model training end notification may include attributes shown in Table 5.

**Table 5**

| Attribute name | Definition |
|---|---|
| Training percentage (ML training percentage) | Indicates a progress percentage of ML model training |
| ML training estimated end time (ML training estimated end time) | Indicates estimated end time of the ML model training |

For another example, an ML model training progress (ML model training progress) notification may indicate the progress percentage of the ML model training, the training execution duration, and the estimated end time. For example, the ML model training end notification may include attributes shown in Table 6.

**Table 6**

| Attribute name | Definition |
|---|---|
| ML training percentage | Indicates a progress percentage of ML model training |
| ML training execution duration (ML training time period) | Indicating execution duration of the ML model training |
| ML training estimated end time | Indicates estimated end time of the ML model training |

It should be understood that an action of sending the second information by the first device may not depend on the procedure shown in FIG. 6. For example, the first device performs training on the ML model between the first device and the second device in an ML model training triggering manner described in section 6.2.2 in the TS28.105 V0.1.0. The first device may further send the second information to the second device, to indicate the training progress of the ML model. This may avoid repeated training on the ML model.

In an example, when the second information is implemented with reference to the procedure shown in FIG. 7, the procedure shown in FIG. 7 may further include S205. In S205, the first device may send the second information to the second device. In addition, when the second information is implemented with reference to the procedure shown in FIG. 8, the procedure shown in FIG. 8 may further include S304. In S304, the first device may send the second information to the second device. For example, the second information in S205 or S304 includes the ML model training start notification shown in Table 4, the ML model training end notification shown in Table 5, or the ML model training progress notification shown in Table 6.

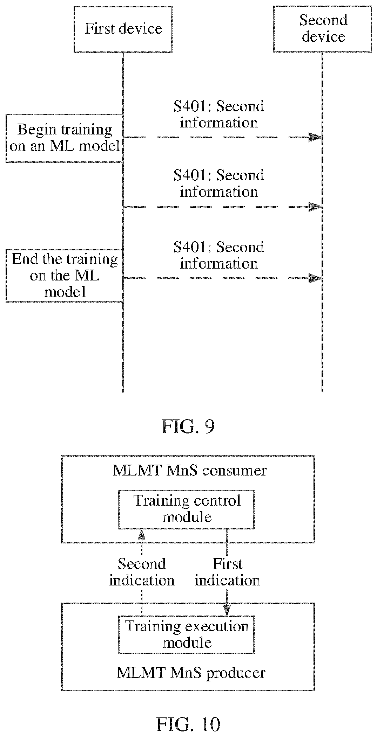

In another example, as shown in FIG. 9, in S401, a first device may send second information to a second device, to indicate a training progress of an ML model. The first device may perform S401 at least once when beginning training on the ML model, in a training process of the ML model, or after ending training on the ML model. For example, the first device sends, to the second device when the training on the ML model begins, second information indicating that the training on the ML model begins, sends, in the training process of the ML model, second information indicating the training progress of the ML model, and sends, after the training on the ML model ends, second information indicating that the training on the ML model ends. For another example, the first device sends, to the second device when the training on the ML model begins, the second information indicating that the training on the ML model begins, and sends, after the training on the ML model ends, the second information indicating that the training on the ML model ends. For another example, the first device sends, in the training process of the ML model, the second information indicating the training progress of the ML model, and sends, after the training on the ML model ends, the second information indicating that the training on the ML model ends. For another example, the first device sends, to the second device when the training on the ML model begins, the second information indicating that the training on the ML model begins, and sends, in the training process of the ML model, the second information indicating the training progress of the ML model. For another example, the first device sends, to the second device when the training on the ML model begins, the second information indicating that the training on the ML model begins, sends, in the training process of the ML model, the second information indicating the training progress of the ML model, or sends, after the training on the ML model ends, the second information indicating that the training on the ML model ends.

The training process of the ML model is between beginning the training on the ML model and ending the training on the ML model. Optionally, in the training process of the ML model, the first device may send the second information to the second device at least once. It should be understood that, in FIG. 9, dashed arrows indicate that the first device may perform S401 successively or for a plurality of times. Content of the second information may be different each time S401 is performed.

For example, if the first device sends the second information when beginning the training on the ML model, the second information may include at least one of information indicating that the training on the ML model begins, estimated training time of the training on the ML model, or training beginning time of the ML model. If the first device sends the second information in the training process of the ML model, the second information may include at least one of a percentage value indicating a completed (or uncompleted) progress of the training on the ML model, estimated training time of the training on the ML model, training execution duration of the ML model, and training beginning time of the ML model. If the first device sends the second information after ending the training on the ML model, the second information may include at least one of information indicating that the training on the ML model ends, training execution duration of the ML model, or training end time of the ML model.

Based on the foregoing method embodiments, an embodiment of this application further provides a communication apparatus configured to implement the communication method used for machine learning model training. When the communication apparatus is configured to implement the method performed by the first device, the communication apparatus may include a training execution module. When the communication apparatus is configured to implement the method performed by the second device, the some apparatuses may include a training control module.

For example, an example in which the first device is an MLMT MnS producer and the second device is an MLMT MnS consumer is used. When the procedure shown in FIG. 7 is implemented, a training execution module in the MLMT MnS producer may perform the steps performed by the first device in the procedure shown in FIG. 7, and a training control module in the MLMT MnS consumer may perform the steps performed by the second device in the procedure shown in FIG. 7. For details, refer to descriptions in the procedure in FIG. 7. As shown in FIG. 10, the training execution module may send the second indication in S201 to the training control module, and the training control module may send the first indication in S202 to the training execution module. In addition, the training execution module may further trigger training on an ML model and perform training on the ML model. Alternatively, the training execution module may send at least one of the training result of the ML model in S204 and the second information in S205 to the training control module.

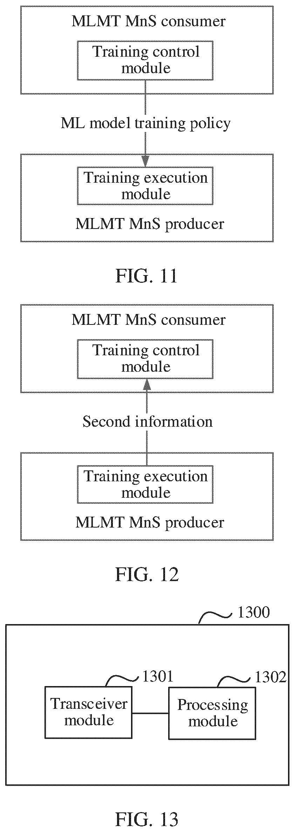

When the procedure shown in FIG. 8 is implemented, the training execution module in the MLMT MnS producer may perform the steps performed by the first device in the procedure shown in FIG. 8, and the training control module in the MLMT MnS consumer may perform the steps performed by the second device in the procedure shown in FIG. 8. For details, refer to descriptions in the procedure in FIG. 8. For example, as shown in FIG. 11, the training control module may send the training policy of the ML model in S301 to the training execution module, and the training execution module may perform S302, in other words, perform training on the ML model according to the training policy of the ML model. In addition, the training execution module may alternatively send at least one of the training result of the ML model in S303 and the second information in S304 to the training control module.

When the procedure shown in FIG. 9 is implemented, the training execution module in the MLMT MnS producer may perform the steps performed by the first device in the procedure shown in FIG. 9, and the training control module in the MLMT MnS consumer may perform the steps performed by the second device in the procedure shown in FIG. 9. For details, refer to descriptions in the procedure in FIG. 9. For example, as shown in FIG. 12, the training control module may send the second information in S401 to the training execution module, to indicate a training progress of the ML model.

Optionally, when an ML model-related indication (for example, any one of a first indication to a fourth indication), ML model-related information (for example, any one of the first information and the second information), or an ML model-related notification (for example, any one of a first notification and a second notification) is transmitted between the first device and the second device in this application, at least one of an identifier of the ML model and type information of the ML model may be carried or sent together, to indicate which ML model or type of ML model the corresponding indication, information, or notification is associated with. For example, in communication processes such as S102 in the procedure shown in FIG. 6, S201, S202, S204, and S205 in the procedure shown in FIG. 7, S301, S303, or S304 in the procedure shown in FIG. 8, and S401 shown in FIG. 9, at least one of the identifier of the ML model and the type information of the ML model may be sent between the first device and the second device to indicate an ML model or a type of the ML model related in a related interaction process. For example, in S101, the second device may send the first information and at least one of the identifier of the ML model and the type information of the ML model to the first device, to indicate an ML model or ML models for which the first information is specific, so that the first device can perform training, based on the first information, on an ML model that has at least one of the identifier of the ML model and the type information of the ML model.

Based on the foregoing method embodiments, an embodiment of this application further provides a communication apparatus. As shown in FIG. 13, a structure of the apparatus includes a transceiver module (or a communication module) 1301 and a processing module 1302. The transceiver module 1301 may include at least one of a receiving module and a sending module, and is configured to implement at least one of information receiving and information sending. The processing module 1302 may be configured to generate information sent by the transceiver module 1301, or process information received by the transceiver module 1301. The processing module 1302 may also be configured to perform an action other than receiving and sending in the foregoing method embodiments. The apparatus 1300 may be used in at least one of a first device and a second device. The first device and the second device may be used in the communication system shown in FIG. 1 to FIG. 5, and may implement the communication method used for machine learning model training in the foregoing figures.

When the communication apparatus is configured to implement the first device provided in this embodiment of this application, the communication apparatus may include the first device. In other words, the first device may include the transceiver module 1301 and the processing module 1302. The transceiver module 1301 may be configured to receive first information from the second device, where the first information includes at least one of a first indication and a training condition of an ML model. A value range of the first indication includes a first value and a second value, where the first value indicates the communication apparatus to perform training on the ML model, the second value indicates the communication apparatus not to perform training on the ML model, and a value of the first indication is the first value. The processing module may be configured to perform training on the ML model based on the first information. The communication apparatus includes a model training producer, and the second device includes a model training consumer.

In a possible implementation, the transceiver module 1301 may further send a training result of the ML model to the second device.

In a possible implementation, the first information includes the first indication, and the processing module 1302 may further start the training on the ML model. The transceiver module 1301 may be further configured to send a second indication to the second device, where the second indication is used to notify the starting of the training on the ML model, indicates the second device to determine whether to perform training on the ML model, or indicates the second device to determine whether the first device performs training on the ML model.

In a possible implementation, the transceiver module 1301 may further send a third indication to the second device, where the third indication is used to request a training control parameter of the ML model. The transceiver module 1301 receives the training control parameter of the ML model from the second device, where the training control parameter of the ML model is used by the communication apparatus to perform training on the ML model.

In a possible implementation, the training control parameter of the ML model includes at least one of the following: an identifier of the ML model; type information of the ML model; iteration times of the training on the ML model; a performance requirement of the ML model; training time of the ML model; or data used to train the ML model.

In a possible implementation, the data used to train the ML model includes at least one of the following: a data source, an updated network state, and updated training data.

In a possible implementation, the training condition of the ML model includes at least one of the following: a network load condition, a network coverage condition, and a network performance condition.

In a possible implementation, the network load condition includes at least one of a PRB utilization threshold and a user connection quantity threshold.

In a possible implementation, the network coverage condition includes at least one of the following: an RSRP threshold and a coverage rate threshold of the RSRP threshold in an area, an RSRQ threshold and a coverage rate threshold of the RSRQ threshold in the area, or an RSSINR threshold and a coverage rate threshold of the RSSINR threshold in the area.

In a possible implementation, the network performance condition includes at least one of the following: a handover success rate threshold, a data energy efficiency threshold, or a network slice energy efficiency threshold.

In a possible implementation, the transceiver module 1301 may further send training state information of the ML model to the second device, where the training state information indicates whether the ML model is trained, or whether the training on the ML model is performed based on at least one of a performance evaluation result of the ML model, the updated network state, and the updated training data.

In a possible implementation, the transceiver module 1301 may further send second information to the second device, where the second information includes at least one of the following: information indicating a training progress of the ML model; estimated training time of the training on the ML model; training execution duration of the ML model; training beginning time of the ML model; or training end time of the ML model.

When the communication apparatus is configured to implement the second device provided in this embodiment of this application, the communication apparatus may include the second device. In other words, the second device may include the transceiver module 1301 and the processing module 1302. The processing module 1302 may be configured to determine the first information, where the first information includes at least one of the first indication and the training condition of the ML model. The value range of the first indication includes the first value and the second value, where the first value indicates the first device to perform training on the ML model, the second value indicates the first device not to perform training on the ML model, and the value of the first indication is the first value. The transceiver module 1301 is configured to send the first information to the first device. The first device includes the model training producer, and the second device includes the model training consumer.

In a possible implementation, the transceiver module 1301 may be further configured to receive the training result of the ML model from the first device.

In a possible implementation, the first information includes the first indication, and the transceiver module 1301 may be further configured to receive the second indication from the first device. The second indication is used to notify the starting of the training on the ML model, indicates the second device to determine whether to perform training on the ML model, or indicates the second device to determine whether the first device performs training on the ML model.

In a possible implementation, the transceiver module 1301 may be further configured to receive the third indication from the first device, where the third indication is used to request the training control parameter of the ML model. The transceiver module 1301 may be further configured to send the training control parameter of the ML model to the first device, where the training control parameter of the ML model is used by the first device to perform training on the ML model.

In a possible implementation, the training control parameter of the ML model includes at least one of the identifier of the ML model, the type information of the ML model, the iteration times of the training on the ML model, the performance requirement of the ML model, the training time of the ML model, and the data used to train the ML model.

In a possible implementation, the data used to train the ML model includes at least one of the data source, the updated network state, and the updated training data.

In a possible implementation, the training condition of the ML model includes at least one of the network load condition, the network coverage condition, and the network performance condition.

In a possible implementation, the network load condition includes at least one of the PRB utilization threshold and the user connection quantity threshold.

In a possible implementation, the network coverage condition includes at least one of the following: the RSRP threshold and the coverage rate threshold of the RSRP threshold in the area, the RSRQ threshold and the coverage rate threshold of the RSRQ threshold in the area, and the RSSINR threshold and the coverage rate threshold of the RSSINR threshold in the area.

In a possible implementation, the network performance condition includes at least one of the handover success rate threshold, the data energy efficiency threshold, and the network slice energy efficiency threshold.

In a possible implementation, the transceiver module 1301 may further receive the training state information of the ML model from the first device, where the training state information indicates whether the ML model is trained, or the training state information indicates whether the ML model is trained based on at least one of the performance evaluation result of the ML model, the updated network state, and the updated training data.

In a possible implementation, the transceiver module 1301 may be further configured to receive the second information from the first device, where the second information includes at least one of the information indicating the training progress of the ML model, the estimated training time of the training on the ML model, the training execution duration of the ML model, the training beginning time of the ML model, or the training end time of the ML model.

In a possible implementation, when implementing a function of the first device, the transceiver module 1301 may be further configured to send a new data based machine learning ML training indication to the second device, where the new data based ML training indication indicates whether to perform training based on the updated training data of the ML model.

Optionally, the transceiver module 1301 may be further configured to receive the training control parameter of the ML model from the second device, where the training control parameter of the ML model is used by the communication apparatus to perform training on the ML model.

Optionally, the transceiver module 1301 may further send the second information to the second device, where the second information includes at least one of the following: the information indicating the training progress of the ML model; the estimated training time of the training on the ML model; the training execution duration of the ML model; the training beginning time of the ML model; or the training end time of the ML model.

Optionally, the information indicating the training progress of the ML model includes information indicating that the training on the ML model begins or information indicating that the training on the ML model ends.

Optionally, the transceiver module 1301 may further send the training state information of the ML model to the second device, where the training state information indicates running of the training on the ML model.

In a possible implementation, when implementing a function of the second device, the transceiver module 1301 may be further configured to receive the new data based machine learning ML training indication from the first device, where the new data based ML training indication indicates whether to perform training based on the updated training data of the ML model.

Optionally, the transceiver module 1301 may be further configured to send the training control parameter of the ML model to the first device, where the training control parameter of the ML model is used by the communication apparatus to perform training on the ML model.

Optionally, the transceiver module 1301 may be further configured to receive the second information from the first device, where the second information includes at least one of the following: the information indicating the training progress of the ML model; the estimated training time of the training on the ML model; the training execution duration of the ML model; the training beginning time of the ML model; or the training end time of the ML model.

Optionally, the information indicating the training progress of the ML model includes the information indicating that the training on the ML model begins or the information indicating that the training on the ML model ends.

Optionally, the transceiver module 1301 may be further configured to receive the training state information of the ML model from the first device, where the training state information indicates the running of the training on the ML model.

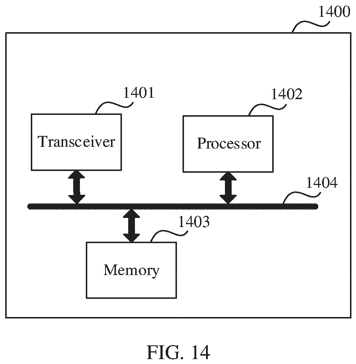

Based on the foregoing embodiments, an embodiment of this application further provides a communication apparatus. The device is configured to implement the communication method for machine learning model training in the foregoing figures. Refer to FIG. 14. A communication apparatus 1400 may include at least one of a transceiver 1401, a processor 1402, and a memory 1403. The transceiver 1401, the processor 1402, and the memory 1403 are connected to each other.

Optionally, the transceiver 1401, the processor 1402, and the memory 1403 are connected to each other via a bus 1404. The bus 1404 may be a peripheral component interconnect (peripheral component interconnect, PCI) bus, an extended industry standard architecture (extended industry standard architecture, EISA) bus, or the like. The bus can be divided into an address bus, a data bus, a control bus, and the like. For ease of indication, the bus is represented by using only one bold line in FIG. 14. However, it does not indicate that there is only one bus or only one type of bus.

The transceiver 1401 is configured to receive and send data, to implement communication with another device. For example, the transceiver 1401 may be configured to perform a function of the transceiver module 1301.

Optionally, the transceiver may include a communication interface. The communication interface may be used for communication of the communication apparatus 1400. For example, the communication interface may be configured to implement, in a wired manner, a function of the transceiver module 1301 shown above.

The processor 1402 is configured to implement the communication method for machine learning model training in the foregoing figures. For details, refer to descriptions in the foregoing embodiments. For example, the processor 1402 may be configured to perform a function of the processing module 1302.

The memory 1403 is configured to store program instructions and the like. Specifically, the program instructions may include program code, and the program code includes computer operation instructions. The memory 1403 may include a random access memory (random access memory, RAM), or may further include a non-volatile memory (non-volatile memory), for example, at least one magnetic disk memory. The processor 1402 executes the program instructions stored in the memory 1403, to implement the foregoing function, and implement the communication method for machine learning model training provided in the foregoing embodiments.

It should be understood that at least one of the communication module 1301 and the transceiver 1401 shown above may be configured to perform an action of sending information, a notification, or a message by the first device to the second device, or perform an action of receiving information, a notification, or a message by the second device from the first device, for example, perform any one of S201, S204, S205, S303, and S304. At least one of the communication module 1301 and the transceiver 1401 may be further configured to perform an action of sending information, a notification, or a message by the second device to the first device, or configured to perform an action of receiving information, a notification, or a message by the first device from the second device, for example, perform any one of S102, S202, and S301.

At least one of the processing module 1302 and the processor 1402 may be configured to perform a processing action of the first device or the second device. For example, the processing action of the first device includes S103, S203, and S302. The processing actions of the first device and the second device may further include triggering training on an ML model, generating information, a notification, or a message sent by at least one of the communication module 1301 and the transceiver 1401, or processing information, a notification, or a message received by at least one of the communication module 1301 and the transceiver 1401.

It should be further understood that in steps performed by at least one of the transceiver module 1301, the transceiver 1401, the processing module 1302, and the processor 1402, for related technical terms, nouns, action implementations, and the like, refer to descriptions of corresponding technical terms, nouns, and action implementations in FIG. 6 to FIG. 9 in the method embodiments of this application. For example, in an action of sending the second indication performed by the communication module 1301 and the transceiver 1401, for a meaning and a function of the second indication, refer to descriptions of S201 in FIG. 7 in this application. For another example, for an execution manner of performing training on the ML model based on the first information by at least one of the processing module 1302 and the processor 1402, refer to descriptions of S 103 shown in FIG. 6, S203 shown in FIG. 7, and S302 shown in FIG. 8 in this application. No more examples are provided.

Based on the foregoing embodiments, an embodiment of this application further provides a communication method for machine learning model training. The method is implemented by a first device and a second device. The second device may be configured to send first information to the first device, and the first device may be configured to receive the first information from the second device, and perform training on an ML model based on the first information. For details of the method, refer to an implementation in this application.

Based on the foregoing embodiments, an embodiment of this application further provides a system. The system may include the foregoing first device and second device.

Based on the foregoing embodiments, an embodiment of this application further provides a computer program. When the computer program runs on a computer, the computer is enabled to perform the communication method for machine learning model training provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the communication method for machine learning model training provided in the foregoing embodiments.

Based on the foregoing embodiments, an embodiment of this application further provides a chip. The chip is configured to read a computer program stored in a memory, to implement the communication method for machine learning model training provided in the foregoing embodiments. The chip may include a processor.

Based on the foregoing embodiments, an embodiment of this application provides a chip system. The chip system includes a processor, configured to support a computer apparatus in implementing a function related to at least one of the first device and the second device in the foregoing embodiments. In a possible design, the chip system further includes a memory, and the memory is configured to store a program and data that are necessary for the computer apparatus. The chip system may include a chip, or may include a chip and another discrete component.

In conclusion, an embodiment of this application provides a communication method for machine learning model training. In the method, a first device (for example, a model training producer) may train an ML model based on first information from a second device (for example, a model training consumer). The first information includes at least one of a first indication and a condition for starting the training on the ML model. Therefore, the training on the ML model performed by the first device is determined by the second device, or is based on the condition for starting the training on the ML model indicated by the second device. Therefore, a case in which the first device starts the training on the ML model when the training on the ML model does not need to be performed is avoided, so that a waste of resources is reduced.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. This application is intended to cover these modifications and variations provided that they fall within the scope of protection defined by the following claims and their equivalent technologies.

In this application, "a plurality of" means two or more than two. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, or C" may represent the following cases: including A, including B, including C, including A and B, including A and C, including B and C, and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A communication method for machine learning model training, comprising:
receiving, by a first device, first information from a second device, wherein the first information comprises at least one of a first indication and a training condition of a machine learning ML model; a value range of the first indication comprises a first value and a second value, wherein the first value indicates the first device to perform training on the ML model, and the second value indicates the first device not to perform training on the ML model; and a value of the first indication is the first value; and
performing, by the first device, training on the ML model based on the first information.

2. The method according to claim 1, wherein the first information comprises the first indication, and the method further comprises:
starting, by the first device, the training on the ML model; and
sending, by the first device, a second indication to the second device, wherein the second indication is used to notify the starting of the training on the ML model.

3. The method according to claim 1 or 2, wherein the method further comprises:
sending, by the first device, a third indication to the second device, wherein the third indication is used to request a training control parameter of the ML model; and
receiving, by the first device, the training control parameter of the ML model from the second device, wherein the training control parameter of the ML model is used by the first device to perform training on the ML model.

4. The method according to claim 3, wherein the training control parameter of the ML model comprises at least one of the following:
an identifier of the ML model;
type information of the ML model;
iteration times of the training on the ML model;
a performance requirement of the ML model;
training time of the ML model; or
data used to train the ML model.

5. The method according to claim 4, wherein the data used to train the ML model comprises at least one of the following: a data source, an updated network state, and updated training data.

6. The method according to any one of claims 1 to 5, wherein the training condition of the ML model comprises at least one of the following: a network load condition, a network coverage condition, and a network performance condition.

7. The method according to claim 6, wherein the network load condition comprises at least one of the following:
a physical resource block PRB utilization threshold; or
a user connection quantity threshold.

8. The method according to claim 6 or 7, wherein the network coverage condition comprises at least one of the following:
a reference signal received power RSRP threshold and a coverage rate threshold of the RSRP threshold in an area;
a reference signal received quality RSRQ threshold and a coverage rate threshold of the RSRQ threshold in an area; or
a reference signal signal to interference plus noise ratio RSSINR threshold and a coverage rate threshold of the RSSINR threshold in an area.

9. The method according to any one of claims 6 to 8, wherein the network performance condition comprises at least one of the following:
a handover success rate threshold;
a data energy efficiency threshold; or
a network slice energy efficiency threshold.

10. The method according to any one of claims 1 to 9, wherein the method further comprises:
sending, by the first device, training state information of the ML model to the second device, wherein the training state information indicates:
whether the ML model has been trained; or
whether the ML model is trained based on at least one of a performance evaluation result of the ML model, the updated network state, and the updated training data.

11. The method according to any one of claims 1 to 10, wherein the method further comprises:
sending, by the first device, second information to the second device, wherein the second information comprises at least one of the following:
information indicating a training progress of the ML model;
estimated training time of the training on the ML model;
training execution duration of the ML model;
training beginning time of the ML model; or
training end time of the ML model.

12. A communication method for machine learning model training, comprising:
determining, by a second device, first information, wherein the first information comprises at least one of a first indication and a training condition of a machine learning ML model; a value range of the first indication comprises a first value and a second value, wherein the first value indicates a first device to perform training on the ML model, and the second value indicates the first device not to perform training on the ML model; and a value of the first indication is the first value; and
sending, by the second device, the first information to the first device.

13. The method according to claim 12, wherein the first information comprises the first indication, and the method further comprises:
receiving, by the second device, a second indication from the first device, wherein the second indication is used to notify starting of the training on the ML model.

14. The method according to claim 12 or 13, wherein the method further comprises:
receiving, by the second device, a third indication from the first device, wherein the third indication is used to request a training control parameter of the ML model; and
sending, by the second device, the training control parameter of the ML model to the first device, wherein the training control parameter of the ML model is used by the first device to perform training on the ML model.

15. The method according to claim 14, wherein the training control parameter of the ML model comprises at least one of the following:
an identifier of the ML model;
type information of the ML model;
iteration times of the training on the ML model;
a performance requirement of the ML model;
training time of the ML model; or
data used to train the ML model.

16. The method according to claim 15, wherein the data used to train the ML model comprises at least one of the following: a data source, an updated network state, and updated training data.

17. The method according to any one of claims 12 to 16, wherein the training condition of the ML model comprises at least one of the following: a network load condition, a network coverage condition, and a network performance condition.

18. The method according to claim 17, wherein the network load condition comprises at least one of the following:
a physical resource block PRB utilization threshold; or
a user connection quantity threshold.

19. The method according to claim 17 or 18, wherein the network coverage condition comprises at least one of the following:
a reference signal received power RSRP threshold and a coverage rate threshold of the RSRP threshold in an area;
a reference signal received quality RSRQ threshold and a coverage rate threshold of the RSRQ threshold in an area; or
a reference signal signal to interference plus noise ratio RSSINR threshold and a coverage rate threshold of the RSSINR threshold in an area.

20. The method according to any one of claims 17 to 19, wherein the network performance condition comprises at least one of the following:
a handover success rate;
data energy efficiency; or
network slice energy efficiency.

21. The method according to any one of claims 12 to 20, wherein the method further comprises:
receiving, by the second device, training state information of the ML model from the first device, wherein the training state information indicates:
whether the ML model has been trained; or
whether the ML model is trained based on at least one of a performance evaluation result of the ML model, the updated network state, and the updated training data.

22. The method according to any one of claims 12 to 21, wherein the method further comprises:
receiving, by the second device, second information from the first device, wherein the second information comprises at least one of the following:
information indicating a training progress of the ML model;
estimated training time of the training on the ML model;
training execution duration of the ML model;
training beginning time of the ML model; or
training end time of the ML model.

23. A first device for machine learning model training, comprising:
a transceiver module, configured to receive first information from a second device, wherein the first information comprises at least one of a first indication and a training condition of a machine learning ML model; a value range of the first indication comprises a first value and a second value, wherein the first value indicates the first device to perform training on the ML model, and the second value indicates the first device not to perform training on the ML model; and a value of the first indication is the first value; and
a processing module, configured to perform training on the ML model based on the first information.

24. The first device according to claim 23, wherein the first information comprises the first indication, and the processing module is further configured to:
start the training on the ML model; and
the transceiver module is further configured to:
send a second indication to the second device, wherein the second indication is used to notify the starting of the training on the ML model.

25. The first device according to claim 23 or 24, wherein the transceiver module is further configured to:
send a third indication to the second device, wherein the third indication is used to request a training control parameter of the ML model; and
receive the training control parameter of the ML model from the second device, wherein the training control parameter of the ML model is used by the first device to perform training on the ML model.

26. The first device according to claim 25, wherein the training control parameter of the ML model comprises at least one of the following:
an identifier of the ML model;
type information of the ML model;
iteration times of the training on the ML model;
a performance requirement of the ML model;
training time of the ML model; or
data used to train the ML model.

27. The first device according to claim 26, wherein the data used to train the ML model comprises at least one of the following: a data source, an updated network state, and updated training data.

28. The first device according to any one of claims 23 to 27, wherein the training condition of the ML model comprises at least one of the following: a network load condition, a network coverage condition, and a network performance condition.

29. The first device according to claim 28, wherein the network load condition comprises at least one of the following:
a physical resource block PRB utilization threshold; or
a user connection quantity threshold.

30. The first device according to claim 28 or 29, wherein the network coverage condition comprises at least one of the following:
a reference signal received power RSRP threshold and a coverage rate threshold of the RSRP threshold in an area;
a reference signal received quality RSRQ threshold and a coverage rate threshold of the RSRQ threshold in an area; or
a reference signal signal to interference plus noise ratio RSSINR threshold and a coverage rate threshold of the RSSINR threshold in an area.

31. The first device according to any one of claims 28 to 30, wherein the network performance condition comprises at least one of the following:
a handover success rate threshold;
a data energy efficiency threshold; or
a network slice energy efficiency threshold.

32. The first device according to any one of claims 23 to 31, wherein the transceiver module is further configured to:
send training state information of the ML model to the second device, wherein the training state information indicates:
whether the ML model has been trained; or
whether the ML model is trained based on at least one of a performance evaluation result of the ML model, the updated network state, and the updated training data.

33. The first device according to any one of claims 23 to 32, wherein the transceiver module is further configured to:
send second information to the second device, wherein the second information comprises at least one of the following:
information indicating a training progress of the ML model;
estimated training time of the training on the ML model;
training execution duration of the ML model;
training beginning time of the ML model; or
training end time of the ML model.

34. A second device for machine learning model training, comprising:
a processing module, configured to determine first information, wherein the first information comprises at least one of a first indication and a training condition of a machine learning ML model; a value range of the first indication comprises a first value and a second value, wherein the first value indicates the first device to perform training on the ML model, and the second value indicates the first device not to perform training on the ML model; and a value of the first indication is the first value; and
a transceiver module, configured to send the first information to the first device.

35. The second device according to claim 34, wherein the first information comprises the first indication, and the transceiver module is further configured to:
receive a second indication from the first device, wherein the second indication is used to notify starting of the training on the ML model.

36. The second device according to claim 34 or 35, wherein the transceiver module is further configured to:
receive a third indication from the first device, wherein the third indication is used to request a training control parameter of the ML model; and
send the training control parameter of the ML model to the first device, wherein the training control parameter of the ML model is used by the first device to perform training on the ML model.

37. The second device according to claim 36, wherein the training control parameter of the ML model comprises at least one of the following:
an identifier of the ML model;
type information of the ML model;
iteration times of the training on the ML model;
a performance requirement of the ML model;
training time of the ML model; or
data used to train the ML model.

38. The second device according to claim 37, wherein the data used to train the ML model comprises at least one of the following: a data source, an updated network state, and updated training data.

39. The second device according to any one of claims 34 to 38, wherein the training condition of the ML model comprises at least one of the following: a network load condition, a network coverage condition, and a network performance condition.

40. The second device according to claim 39, wherein the network load condition comprises at least one of the following:
a physical resource block PRB utilization threshold; or
a user connection quantity threshold.

41. The second device according to claim 39 or 40, wherein the network coverage condition comprises at least one of the following:
a reference signal received power RSRP threshold and a coverage rate threshold of the RSRP threshold in an area;
a reference signal received quality RSRQ threshold and a coverage rate threshold of the RSRQ threshold in an area; or
a reference signal signal to interference plus noise ratio RSSINR threshold and a coverage rate threshold of the RSSINR threshold in an area.

42. The second device according to any one of claims 39 to 41, wherein the network performance condition comprises at least one of the following:
a handover success rate;
data energy efficiency; or
network slice energy efficiency.

43. The second device according to any one of claims 34 to 42, wherein the transceiver module is further configured to:
receive training state information of the ML model from the first device, wherein the training state information indicates:
whether the ML model has been trained; or
whether the ML model is trained based on at least one of a performance evaluation result of the ML model, the updated network state, and the updated training data.

44. The second device according to any one of claims 34 to 43, wherein the transceiver module is further configured to:
receive second information from the first device, wherein the second information comprises at least one of the following:
information indicating a training progress of the ML model;
estimated training time of the training on the ML model;
training execution duration of the ML model;
training beginning time of the ML model; or
training end time of the ML model.

45. A communication method for machine learning model training, comprising:
sending, by a first device, a new data based machine learning ML training indication to a second device, wherein the new data based ML training indication indicates whether training is performed based on updated training data of an ML model.

46. The method according to claim 45, wherein the method further comprises:
receiving, by the first device, a training control parameter of the ML model from the second device, wherein the training control parameter of the ML model is used by the first device to perform training on the ML model.

47. The method according to claim 45 or 46, wherein the method further comprises:
sending, by the first device, second information to the second device, wherein the second information comprises at least one of the following:
information indicating a training progress of the ML model;
estimated training time of the training on the ML model;
training execution duration of the ML model;
training beginning time of the ML model; or
training end time of the ML model.

48. The method according to claim 47, wherein the information indicating the training progress of the ML model comprises information indicating that the training on the ML model begins or information indicating that the training on the ML model is finished.

49. The method according to any one of claims 45 to 48, wherein the method further comprises:
sending, by the first device, training state information of the ML model to the second device, wherein the training state information indicates running of the training on the ML model.

50. A communication method for machine learning model training, comprising:
receiving, by a second device, a new data based machine learning ML training indication from a first device, wherein the new data based ML training indication indicates whether training is performed based on updated training data of an ML model.

51. The method according to claim 50, wherein the method further comprises:
sending, by the second device, the training control parameter of the ML model to the first device, wherein the training control parameter of the ML model is used by the first device to perform training on the ML model.

52. The method according to claim 50 or 51, wherein the method further comprises:
receiving, by the second device, second information from the first device, wherein the second information comprises at least one of the following:
information indicating a training progress of the ML model;
estimated training time of the training on the ML model;
training execution duration of the ML model;
training beginning time of the ML model; or
training end time of the ML model.

53. The method according to claim 52, wherein the information indicating the training progress of the ML model comprises information indicating that the training on the ML model begins or information indicating that the training on the ML model is finished.

54. The method according to any one of claims 50 to 53, wherein the method further comprises:
receiving, by the second device, training state information of the ML model from the first device, wherein the training state information indicates running of the training on the ML model.

55. A communication apparatus for machine learning model training, comprising:
a communication module, configured to send a new data based machine learning ML training indication to a second device, wherein the new data based ML training indication indicates whether training is performed based on updated training data of an ML model.

56. The apparatus according to claim 55, wherein the communication module is further configured to:
receive a training control parameter of the ML model from the second device, wherein the training control parameter of the ML model is used by the communication apparatus to perform training on the ML model.

57. The apparatus according to claim 55 or 56, wherein the communication module is further configured to:
send second information to the second device, wherein the second information comprises at least one of the following:
information indicating a training progress of the ML model;
estimated training time of the training on the ML model;
training execution duration of the ML model;
training beginning time of the ML model; or
training end time of the ML model.

58. The apparatus according to claim 57, wherein the information indicating the training progress of the ML model comprises information indicating that the training on the ML model begins or information indicating that the training on the ML model is finished.

59. The apparatus according to any one of claims 55 to 58, wherein the communication module is further configured to:
send training state information of the ML model to the second device, wherein the training state information indicates running of the training on the ML model.

60. A communication apparatus for machine learning model training, comprising:
a communication module, configured to receive a new data based machine learning ML training indication from a first device, wherein the new data based ML training indication indicates whether training is performed based on updated training data of an ML model.

61. The apparatus according to claim 60, wherein the communication module is further configured to:
send a training control parameter of the ML model to the first device, wherein the training control parameter of the ML model is used by the first device to perform training on the ML model.

62. The apparatus according to claim 60 or 61, wherein the communication module is further configured to:
receive second information from the first device, wherein the second information comprises at least one of the following:
information indicating a training progress of the ML model;
estimated training time of the training on the ML model;
training execution duration of the ML model;
training beginning time of the ML model; or
training end time of the ML model.

63. The apparatus according to claim 62, wherein the information indicating the training progress of the ML model comprises information indicating that the training on the ML model begins or information indicating that the training on the ML model is finished.

64. The apparatus according to any one of claims 60 to 63, wherein the communication module is further configured to:
receive training state information of the ML model from the first device, wherein the training state information indicates running of the training on the ML model.

65. A computer-readable storage medium, wherein the computer-readable storage medium is configured to store a computer program, and when the computer program runs on a computer, the computer is enabled to perform the method according to any one of claims 1 to 11, the method according to any one of claims 12 to 22, the method according to any one of claims 45 to 49, or the method according to any one of claims 50 to 54.

66. A computer program product, wherein when the computer program product runs on a computer, the computer is enabled to perform the method according to any one of claims 1 to 11, the method according to any one of claims 12 to 22, the method according to any one of claims 45 to 49, or the method according to any one of claims 50 to 54.

67. A communication system, comprising the first device according to any one of claims 23 to 33, and the second device according to any one of claims 34 to 44; or
comprising the communication apparatus according to any one of claims 55 to 59 and the communication apparatus according to any one of claims 60 to 64.

68. A communication method, comprising:
sending, by a second device, first information to a first device, wherein the first information comprises at least one of a first indication and a training condition of a machine learning ML model; a value range of the first indication comprises a first value and a second value, wherein the first value indicates the first device to perform training on the ML model, and the second value indicates the first device not to perform training on the ML model; and a value of the first indication is the first value; and
performing, by the first device, training on the ML model based on the first information.

69. A communication method, comprising:
sending, by a first device, a new data based machine learning ML training indication to a second device, wherein the new data based ML training indication indicates whether training is performed based on updated training data of an ML model; and
receiving, by the second device, the new data based machine learning ML training indication from the first device.

70. A communication apparatus, comprising a processor, configured to execute a computer program or instructions stored in a memory, to implement the method according to any one of claims 1 to 11, the method according to any one of claims 12 to 22, the method according to any one of claims 45 to 49, or the method according to any one of claims 50 to 54.

71. The communication apparatus according to claim 70, further comprising the memory and/or a transceiver, wherein the transceiver is used by the communication apparatus to perform receiving and/or sending.

72. A communication apparatus, configured to perform an action in the method according to any one of claims 1 to 11, or an action in the method according to any one of claims 12 to 22 or claims 45 to 54.

73. A chip, comprising a processor, configured to perform an action in the method according to any one of claims 1 to 11, or an action in the method according to any one of claims 12 to 22 or claims 45 to 54.
